# EUROPÄISCHE PATENTANMELDUNG

(11) **EP 2 654 006 A1**
(43) Veröffentlichungstag der Anmeldung: **23.10.2013**
(21) Anmeldenummer: 12164365.4
(22) Anmeldetag: 17.04.2012
(51) Int. Cl.: G06Q 20/38

(54) **Elektronisches Transaktionsverfahren**

(71) Anmelder: Deutsche Post AG, 53113 Bonn (DE)
(72) Erfinder: Hagemann, Dirk, 53115 Bonn (DE); Lampe, Jochen, 52393 Hürtgenwald (DE)
(74) Vertreter: Jostarndt, Hans-Dieter

(57) **Zusammenfassung**

Die Erfindung betrifft ein elektronisches Verfahren zur Freigabe (F) einer Transaktion, ein entsprechendes Transaktionssystem (T), eine Transaktions-Applikation (4) zur Ausführung des Verfahrens, ein mobiles Terminal (9) mit einer solchen Transaktions-Applikation (4) und ein Bezahlsystem (B), das zur Ausführung der Transaktion das Transaktionssystem (T) umfasst. Dadurch wird ein einfach zu handhabendes elektronisches Verfahren zur Freigabe (F) einer Transaktion im Rahmen eines Geschäfts zwischen Geschäftspartnern zur Verfügung gestellt, das weitgehend ohne örtliche Begrenzungen angewendet werden kann, ein Minimum an bereits vorhandener technischer Infrastruktur benötigt und dennoch für alle beteiligten Geschäftspartner sicher ist. Das mobile Terminal (9) muss dazu ein Anzeigeelement (91) umfassen, zur Herstellung einer drahtlosen Datenverbindung (811) mit dem Transaktionsserver (6) geeignet und applikations- und E-Mail-fähig sein.

## Beschreibung

### Gebiet der Erfindung

Die Erfindung bezieht sich auf ein elektronisches Verfahren zur Freigabe einer Transaktion, ein entsprechendes Transaktionssystem, eine Transaktions-Applikation zur Ausführung des Verfahrens, ein mobiles Terminal mit einer solchen Transaktions-Applikation, und auf ein Bezahlsystem umfassend das Transaktionssystem.

### Hintergrund der Erfindung

Elektronische Verfahren zur Unterstützung von geschäftlichen Transaktionen, insbesondere das Bezahlen von Waren, werden bereits weltweit eingesetzt. Solche elektronischen Verfahren ermöglichen beispielsweise das bargeldlose Bezahlen in einem Geschäft unter Verwendung einer Bezahlkarte wie beispielsweise eine Girokarte oder eine Kreditkarte. Damit eine solche Zahlung per Girokarte oder Kreditkarte möglich ist, muss im entsprechenden Geschäft ein elektronischer Kartenleser vorhanden sein, in den die entsprechende Bezahlkarte eingeschoben wird und der über eine Datenleitung mit einem Bezahlsystem, beispielsweise der Kartengesellschaft, verbunden ist, damit vom Geschäft aus die Bezahlung ausgeführt werden kann. Damit ein solches bargeldloses Bezahlen möglich ist, müssen die betreffenden Geschäfte die notwendige technische Infrastruktur bereitstellen, d.h. eine Datenleitung zumindest zur Kartengesellschaft und ein oder mehrere entsprechende Kartenleser. Insbesondere kleine Geschäfte wie Kioske oder räumlich abseits gelegene oder mobile Geschäfte sind oftmals nicht in der Lage, die notwendige technische Infrastruktur für ein solches elektronisches Verfahren bereitzustellen. Aber selbst wenn diese Geschäfte die technische Infrastruktur bereitstellen würden, hätten die Geschäfte die Zusatzkosten dafür zu tragen, was gerade für kleine Geschäfte oder Geschäfte mit wenig Umsatz sehr schwierig sein kann.

Es wäre daher ein System oder Verfahren wünschenswert, das gerade für kleine oder mobile Geschäfte geschäftliche Transaktionen bei minimaler technischer Infrastruktur unterstützen kann. Es wäre weiterhin wünschenwert, wenn dieses System oder Verfahren zusätzlich kostengünstig betreibbar wäre.

### Zusammenfassung der Erfindung

Es ist eine Aufgabe der vorliegenden Erfindung, ein einfach zu handhabendes elektronisches Verfahren zur Freigabe einer Transaktion im Rahmen eines Geschäfts zwischen Geschäftspartnern zur Verfügung zu stellen, das weitgehend ohne örtliche Begrenzungen angewendet werden kann, ein Minimum an bereits vorhandener technischer Infrastruktur benötigt und dennoch für alle beteiligten Geschäftspartner sicher ist.

Diese Aufgabe wird gelöst durch ein elektronisches Verfahren zur sicheren Freigabe einer Transaktion im Rahmen eines Geschäfts zumindest zwischen einer ersten und einer zweiten Person über ein mobiles Terminal der zweiten Person mit einem Anzeigeelement, das mit einem Transaktionsserver eines Transaktionsystems über eine drahtlose Datenverbindung zu einem Datenaustausch zur Freigabe der Transaktion verbunden ist, umfassend die Schritte
- Bereitstellen zumindest erster Nutzerdaten der ersten Person und zweiter Nutzerdaten der zweiten Person im Transaktionssystem zum Zugriff durch den Transaktionsserver,
- Bereitstellen eines Identifikationsmoduls durch die erste Person an dem Geschäftspunkt der ersten Person umfassend Informationen zur Identifikation der ersten Person,
- Übermitteln einer Mehrzahl an Transaktionscodierungen durch das Transaktionssystem an die erste Person, wobei sich jede der übermittelten Transaktionscodierungen eindeutig von den anderen übermittelten Transaktionscodierungen unterscheidet,
- Speichern und Zuordnen der übermittelten Mehrzahl der Transaktionscodierungen im Transaktionssystem zu den ersten Nutzerdaten der ersten Person,
- Starten einer auf dem mobilen Terminal der zweiten Person installierten Transaktions-Applikation,
- Erfassen der Information des Identifikationsmoduls mittels des mobilen Terminals und automatisches Herstellen einer Verbindung des mobilen Terminals mit dem Transaktionsserver und automatisches Übermitteln der Information des Identifikationsmoduls an den Transaktionsserver durch die Transaktions-Applikation als Reaktion auf die erfasste Information des Identifikationsmoduls,
- Übermitteln von Daten zur Personenidentifikation der ersten Person durch den Transaktionsserver zum mobilen Terminal der zweiten Person nach erfolgter Verifikation der ersten Person durch den Transaktionsserver basierend auf den an den Transaktionsserver übermittelten Informationen,
- Eingabe transaktionsrelevanter Daten in das mobile Terminal und Übermittlung zumindest dieser transaktionsrelevanten Daten vom mobilen Terminal an den Transaktionsserver,
- Übermitteln einer gültigen Transaktionscodierung aus der Mehrzahl der Transaktionscodierungen, die im Transaktionssystem den Nutzerdaten der ersten Person zugeordnet sind durch den Transaktionsserver an das mobile Terminal als Reaktion auf die an den Transaktionsserver übermittelten transaktionsrelevanten Daten,
- Markieren der übermittelten gültigen Transaktionscodierung durch den Transaktionsserver in der Mehrzahl der den Nutzerdaten zugeordneten gespeicherten Transaktionscodierungen als eine ungültige Transaktionscodierung für nachfolgende Transaktionen,
- Darstellen zumindest von Teilen der übermittelten gültigen Transaktionscodierung zusammen mit den Daten zur Personenidentifikation der ersten Person auf dem Anzeigeelement des mobilen Terminals durch die Transaktions-Applikation zur Ermöglichung eines visuellen Vergleich der dargestellten Transaktionscodierung und der Daten zur Personenidentifikation der ersten Person mit den vom Transaktionsserver an die erste Person übermittelten Transaktionscodierungen.

Mit diesem Vergleich wird der Abschluss der Transaktion durch die erste Person ermöglicht, sofern dieser Vergleich positiv ausfällt, d.h. die dargestellte Transaktionscodierung und Daten zur Personenidentifikation stimmen mit der ersten Person und mit den noch nicht verbrauchten Transaktionscodierungen auf der Liste der Transaktionscodierungen bei der ersten Person überein. In einer Ausführungsform umfasst dabei jede Transaktionscodierung zumindest einen ersten Transaktionscode und einen zweiten Transaktionscode. In einer bevorzugten Ausführungsform sind die ersten und zweiten Transaktionscodes graphische Codes, die eine einfachere Verwendung bei einer Verminderung des Risikos einer Verwechselung verschiedener Transaktionscodes beziehungsweise der daraus aufgebauten Transaktionscodierungen ermöglichen. In einer weiteren Ausführungsform wird die Transaktions-Applikation durch das Transaktionssystem an das mobile Terminal übermittelt, wodurch die leichte Verfügbarkeit eines wesentlichen technischen Mittels zur Ausführung des Verfahrens für die zweite Person sichergestellt ist.

Dadurch wird ein einfach zu handhabendes elektronisches Verfahren zur Freigabe einer Transaktion im Rahmen eines Geschäfts zwischen Geschäftspartnern (erste und zweite Personen) zur Verfügung gestellt, das weitgehend ohne örtliche Begrenzungen (drahtlose Verbindung zwischen Transaktionsserver und mobilem Terminal) angewendet werden kann, ein Minimum an bereits vorhandener technischer Infrastruktur (mobiles Terminal der zweiten Person) benötigt und dennoch für alle beteiligten Geschäftspartner (erste und zweite Personen) sicher ist (Verwendung eines eindeutigen Identifikationsmoduls für die erste Person, Mitteilung eindeutiger Transaktionscodierungen an die zweiten Person und deren Darstellung zum Vorzeigen gegenüber der ersten Person für einen Vergleich mit entsprechenden Transaktionscodierungen bei der ersten Person, die die erste Person vorab auf einem anderen Weg erhalten hat). Der Begriff "mobiles Terminal" umfasst hierbei alle Geräte mit einem Anzeigeelement, die eine drahtlose Datenverbindung mit dem Transaktionsserver unterhalten können und applikations- und E-Mail-fähig sind, wie beispielsweise Smartphones. Die drahtlose Datenverbindung kann beispielseise über ein Mobilfunknetz oder ein WLAN-Netz erfolgen. Das Verfahren ist dabei für eine beliebige Zahl an ersten und zweiten Personen ausführbar.

Eine Transaktion im Sinne der vorliegenden Erfindung ist beispielsweise das Bezahlen eines Kaufpreises im Rahmen eines Geschäfts zwischen der ersten Person und der zweiten Person. Hierbei sind beispielsweise die erste Person der Verkäufer einer Ware und die zweite Person der Käufer dieser Ware. Der Käufer kann mit dem voranstehenden Verfahren beispielsweise die verifizierte Zahlung des Kaufpreises (die Transaktion) an den Verkäufer veranlassen, damit aufgrund der für den Verkäufer einsehbaren Verifikation im mobilen Terminal das Geschäft durch die erste Person abgeschlossen werden kann. Inhalt der Erfindung ist dabei nicht das Geschäft zwischen erster und zweiten Person, sondern das technische Verfahren zur Ausführung und Verifikation einer Transaktion für die Verfahrensbeteiligten mittels eines technischen Transaktionssystems. Hierzu sind beispielsweise die Bankdaten der ersten und zweiten Person Teil der ersten und zweiten Nutzerdaten. Die Bankdaten der zweiten Person wären allerdings nicht erforderlich, falls die zweite Person ein Guthaben in anderer Form im Rahmen der Transaktion nutzen kann, beispielsweise über ein vorheriges Aufladen eines Guthabenkontos bei einem an der Transaktion beteiligten System mit einem für die Transaktion ausreichenden Geldbetrages. Infolge einer auf der Transaktion basierenden Freigabe kann die Bezahlung des Kaufpreises an den Verkäufer (erste Person) erfolgen. Die Transaktion, hier beispielsweise die Zahlung, wird authorisiert durch das Verwenden von eindeutigen und charakteristischen Transaktionscodierungen. Die zweite Person identifiziert sich durch das Starten der Transaktions-Applikation, indem beispielsweise der Start der Transaktions-Appikation die Eingabe eines Passwortes, PIN-Codes oder anderer oder zusätzlicher Merkmale zur eindeutigen Identifikation am mobilen Terminal erforderlich macht. Beim Startvorgang der Transaktions-Applikation öffnet sich beispielsweise auf dem Anzeigeelement des mobilen Terminals ein entsprechendes Eingabefenster zur Eingabe von Daten, die die zweite Person, hier der Käufer, zum Ausführen der Transaktions-Applikation autorisieren. Anhand der Kommunikation der autorisiert gestarteten Transaktions-Applikation mit dem Transaktionsserver und der entsprechend im System vorhandenen zweiten Nutzerdaten ist die zweite Person im Transaktionssystem eindeutig identifiziert. Über das Identifikationsverfahren des Verkäufers (erste Person) anhand des ihn bezeichnenden Identifikationsmoduls gefolgt von der Übermittlung der daraus erfassten Informationen an den Transaktionsserver durch die Transaktions-Applikation sind beide Verfahrensbeteiligten (erste und zweite Person) für das Transaktionssystem eindeutig identifiziert. Die Informationen zur Identifikation der ersten Person umfassen charakteristische Daten, die eindeutig einer bestimmten ersten Person zugeordnet sind. Das Format der charakteristischen Daten kann dabei unterschiedlich gestaltet sein. Beispielsweise sind die charakteristischen Daten eine eindeutige alphanummerische Folge an Zeichen, die ebenfalls in den Nutzerdaten einer ersten Person abgespeichert ist und somit eine eindeutige Zuordnung der charakteristischen Daten zu einer bestimmten ersten Person erlaubt. Die Information, die aus dem Identifikationsmodul ausgelesen werden kann, muss mindestens die charakteristischen Daten umfassend, kann allerdings je nach Ausführungsform weitere zusätzliche Daten umfassen. Die autorisiert gestartete Transaktions-Applikation kann in einer Ausführungsform für die Kommunikation mit dem Transaktionsserver einen charakterisierenden Schlüssel zur Identifikation beim Transaktionsserver verwenden.

Bereitgestellt wird das Identifikationsmodul mit diesen die erste Person bezeichnenden (identifizierenden) Informationen am Geschäftspunkt der ersten Person. Der Geschäftpunkt bezeichnet dabei einen Ort, an dem die Transaktion über das mobile Terminal der zweiten Person abgewickelt wird. Typischerweise ist dieser Geschäftpunkt gleichbedeutend mit dem Ort der Warenübergabe nach erfolgter Transaktion. Die Bezeichnung "bereitstellen" umfasst dabei jede Form, die es ermöglicht, die auf oder in dem Identifikationsmodul befindliche Information erfassen zu können. In einer Ausführungsform ist das Identifikationsmodul beispielsweise im Bereich einer Kasse in einem Geschäft sichtbar befestigt. Es können auch mehrere Identifikationsmodule genutzt werden, um mehrere Kassen auszustatten. In einer anderen Ausführungsform wird das Identifikationsmodul durch die erste Person mitgeführt und zur Ausführung des erfindungsgemäßen Verfahrens der zweiten Person gezeigt, damit diese die Information des Identifikationsmoduls mit ihrem mobilen Terminal erfassen kann. Das Identifikationsmodul kann dabei vom Transaktionssystem beispielsweise über den Postweg oder elektronisch zum Ausdrucken an die erste Person übermittelt werden. Vorzugsweise wird das Identifikationsmodul zusammen mit der Mehrzahl an Transaktionscodierungen an die erste Person übermittelt. Beispielsweise erstellt der Transaktionsserver anhand der Nutzerdaten ein Identifikationsmodul, das entweder von Transaktionsserver elektronisch an die erste Person übermittelt wird oder der Transaktionsserver steuert ein Erzeugungsmodul für das Identifikationsmodul, das das Identifikationsmodul herstellt, beispielsweise Chips wie RFID-Chips oder NFC-Chip, die in das Identifikationsmodul als Träger der Information zur Identifizierung der ersten Person integriert sind. Der Begriff "erfassen" bezeichnet die Übernahme von Information in jeglicher Form, beispielsweise durch Eingabe einer Folge an Zeichen in ein durch die Transaktions-Applikation bereitgestelltes Eingabefenster, die zum Abschreiben auf dem Identifikationsmoduls sichtbar aufgedruckt sind. Vom Ausdruck "erfassen" ist aber auch ein automatischer Ausleseprozess eines Datenspeichers in oder auf dem Identifikationsmoduls und die Speicherung der ausgelesenen Daten im mobilen Terminal durch die Transaktions-Applikation umfasst. Als Reaktion auf die Erfassung der Daten wird automatisch durch die Transaktions-Applikation mit Hilfe der Mobilfunkmodule oder anderer drahtloser Kommunikationsmodule im mobilen Terminal eine drahtlose Datenverbindung mit dem Transaktionsserver hergestellt und die erfassten Information an diesen übermittelt. Die Verbindungsherstellung und Übermittlung kann dabei durch Quittieren der Eingabe in das Eingabefenster oder durch einen anderweitigen Auslesesprozess automatisch ausgelöst werden. Auch das Abspeichern der erfassten Information durch die Transaktions-Applikation kann die Auslösung der Verbindungsherstellung und Übermittlung an den Transaktionsserver bewirken. Die Verifikation der übermittelten Information bezeichnet einen Vergleich dieser Information mit allen Nutzerdaten zur Zuordnung der Information zu bestimmten Nutzerdaten, deren Zuordnung damit die erste Person eindeutig identifiziert. Die im Gegenzug übermittelten Daten zur Personenidentifikation dienen dazu, im Anzeigeelement des mobilen Terminals die erste Person durch beispielsweise erläuternde Angabe oder Formenzeichen anschaulich darzustellen. Über eine Anzeige dieser Daten zur Personenidentifikation kann die zweite Person beispielsweise kontrollieren, ob die Informationen des Informationsträgers richtig erfasst und korrekt an den Transaktionsserver übermittelt wurden. Wird beispielsweise das Identifikationsmodul in einer Bäckerei A ausgelesen und anschließend als Daten zur Personenidentifikation der ersten Person das Logo eines Schusters B im Anzeigeelement des mobilen Terminals dargestellt, so erkennt die zweite Person, dass ein Fehler vorliegen muss. Umgekehrt weiß die zweite Person nach dem Darstellen des Logos der Bäckerei A im Anzeigeelement, dass das erfindungsgemäße Verfahren bis dahin fehlerfrei verlaufen ist und wird dieses Verfahren entsprechend fortsetzen.

Die Fortsetzung umfasst dabei die Eingabe transaktionsrelevanter Daten wie beispielsweise einen Kaufpreis, dessen Bezahlung durch die Ausführung des erfindungsgemäßen Verfahrens veranlasst wird. Weitere transaktionsrelevante Daten könnten in anderen Ausführungsformen beispielsweise zusätzliche ergänzende Daten zum Kaufpreis sein, wie Vereinbarung einer Ratenzahlung, eines Abzugs von Rabatten und/oder das aktuelle Datum sein. Alternativ können in einer möglichen Ausführung die Kunden über die Transaktions-Applikation die Produkte in einem Geschäft selber einscannen oder so in einem virtuellen Warenkorb ablegen und später bezahlen.

Sollte dagegen diese Zuordnung der Information zu bestimmten Nutzerdaten (erste Person) durch den Transaktionsserver scheitern, beispielsweise weil die erste Person nicht mehr an dem erfindungsgemäßen Verfahren teilnimmt, sendet der Transaktionsserver eine Benachrichtigung an das mobile Terminal, dass das erfindungsgemäße Verfahren für diese übermittelten Informationen nicht weiter durchgeführt werden kann. Bei einem Datenübertragungsfehler kann die Transaktions-Applikation ein erneutes oder alternatives Erfassen der Information von dem Identifikationsmodul anbieten.

Das Starten der Transaktions-Applikation bezeichnet den Aufruf dieser Transaktions-Applikation auf dem mobilen Terminal, wo diese Transaktions-Applikation vorher in einem später beschriebenen Verfahren installiert wurde. Das Starten kann die Eingabe ein oder mehrerer Daten zur Identifikation der zweiten Person umfassen. Die entsprechenden Eingabemasken und deren Aufruffolge werden durch die Transaktions-Applikation automatisch nach deren Aufruf auf dem Anzeigeelement des mobilen Terminals bereitgestellt.

Durch die Verwendung eines einzelnen mobilen Terminals, das alleine für die sichere Ausführung des Verfahrens ausreicht, ist die Anwendung des Verfahrens im Prinizip örtlich unbegrenzt, vorausgesetzt es existiert eine drahtlose Verbindung zwischen dem mobilen Terminal und dem Transaktionsserver. Diese drahtlose Verbindung wird weitgehend an Land und ggf. auch in Bereichen auf See und in der Luft angeboten. Damit die Transaktion freigegeben werden kann, müssen in dem Transaktionssystem Nutzerdaten zu allen teilnehmenden Nutzern, also zumindest erste und zweite Nutzerdaten zu einer ersten und einer zweiten Person, gespeichert sein. Aufgrund dieser Daten werden die Transaktionscodierungen an die erste Person übermittelt, drahtlose Datenverbindungen zum Übermitteln von Daten wie die Informationen des Identifikationsmoduls, transaktionsrelevante Daten, gültige Transaktionscodierungen, etc zwischen mobilem Terminal und Transaktionsserver hergestellt und damit der Abschluss einer Transaktion ermöglicht. Diese Nutzerdaten werden beispielsweise innerhalb des Transaktionssystems in einer Nutzerdatenbank gespeichert, die mit dem Transaktionsserver verbunden ist und auf die der Transaktionsserver zum Ausführen der Verfahrensschritte zugreifen kann, womit die Nutzerdaten somit im Transaktionssystem bereitgestellt sind. Die Nutzerdaten von den Nutzern des Transaktionssystems, also den ersten und zweiten Personen, können in das Transaktionssystem auf unterschiedliche Art und Weise eingepflegt werden, beispielsweise über ein entsprechendes Registrierungsverfahren. Der Begriff "gültige Transaktionscodierung" bezeichnet alle Transaktonscodierungen aus einer Mehrzahl an Transaktionscodierungen, die an eine bestimmte erste Person übermittelt wurden und die im erfindungsgemäßen Verfahren noch nicht durch den Transaktionsserver an ein mobiles Terimnal einer zweiten Person übermittelt wurden. Somit bezeichnet der Begriff "gültige Transaktionscodierung" alle noch nicht durch eine Transaktion verbrauchten Transaktionscodierungen. Nach der Übermittlung der gültigen Transaktionscodierung ist diese damit für eine Transaktion verwendet worden und somit ungültig für alle weiteren folgenden Transaktionen. Entsprechend markiert der Transaktionsserver in der Datei, aus der die gültige Transaktionscodierung entnommen wurde, diese mit einem Marker, beispielsweise durch Setzen einer Flagge, Setzen einer Häkchenbox oder Setzen eines Kopieschutzes für diese Transaktionscodierung, so dass der Transaktionsserver gehindert ist, diese entsprechend markierte Transaktionscodierung erneut bei einer späteren Transaktion aus dieser Liste oder Datei zu entnehmen oder zu kopieren und an ein mobiles Terminal zu senden.

Das Darstellen zumindest von Teilen der übermittelten gültigen Transaktionscodierung zusammen mit den Daten zur Personenidentifikation der ersten Person auf dem Anzeigeelement des mobilen Terminals durch die Transaktions-Applikation ermöglicht die Verifizierung der Vornahme der Transaktion gegenüber der ersten Person. Diese Verifikation ist durch die erste Person gewünscht, da die Verfahrensschritte bis dahin allein von der zweiten Person auf dem mobilen Terminal der zweiten Person durchgeführt wurden. Ein Vergleich der dargestellten Transaktionscodierung, die einer den ersten Nutzerdaten zugeordneten und im Transaktionssystem gespeicherten Transaktionscodierung entspricht, mit den Transaktionscodierungen, die der ersten Person für die Verifikation vom Transaktionssystem direkt übermittelt wurden, schließt einen Missbrauch aus. So kann der Verkäufer eindeutig erkennen, ob die Darstellung im Anzeigeelement einer seiner gültigen Transaktionscodierungen entspricht oder ob die angeblich ausgeführte Transaktion missbräuchlich als erfolgt dargestellt ist. So kann der Verkäufer beispielsweise die Herausgabe der Ware an den Käufer ablehnen, bis dieser eine wirksame Zahlung geleistet hat. Zeigt dagegen der Käufer (zweite Person) dem Verkäufer (erste Person) die Bestätigung der Transaktion anhand der dargestellten gültigen Transaktionscodierung auf seinem mobilen Terminal, kann die Übergabe der Ware an den Käufer erfolgen. Somit wird das Geschäft durch Verwendung des erfindungsgemäßen elektronischen Verfahrens für beide Seiten sicher ausgeführt. Die Transaktionscodierungen können dabei noch weitere Informationen wie laufende Nummern für eine Mehrzahl an Transaktionscodierungen etc. enthalten, so dass nur der sicherheitsrelevante Teil der Transaktionscodierungen, also der Teil, der die Transaktionscodierung eindeutig von anderen Transaktionscodierungen für die jeweilige beteiligte erste Person unterscheidet, dargestellt werden muss. Die übermittelte gültige Transaktionscodierung kann dabei vollständig beispielsweise inklusive eines Händlersymbols als die Daten zur Personenidentifikation für die erste Person dargestellt werden. Werden dagegen nur Teile der übermittelten gültigen Transaktionscodierung dargestellt, so fehlen beispielsweise die Daten zur Personenidentifikation in der Darstellung.

In einer alternativen Ausführungsform kann die erste Person auch auf dem mobilen Terminal anhand von Daten, die vom Transaktionsserver an das mobile Terminal übermittelt werden, ausgewählt werden. Die Daten zu den ersten Personen werden in einer geeigneten Form im Anzeigeelement des mobilen Terminals dargestellt. Diese geeignete Form umfasst vorzugsweise ein Symbol oder Logo, was das Geschäft der ersten Person für die zweite Person erkennbar bezeichnet. Zusätzlich können je nach Ausführungsform und/oder Informationsbedarf der zweiten Person zusätzliche Daten zu der ersten Person direkt mit angezeigt oder durch Anklicken des Symbols oder Logos nachfolgend angezeigt werden. Die Daten der ersten Personen sind in den Nutzerdaten der ersten Personen verfügbar. Nach Auswahl der ersten Person werden die weiteren Verfahrungsschritte wie voranstehend beschrieben ausgeführt.

In einer Ausführungsform umfast die Information zur Identifikation der ersten Person, die durch das Identifikationsmodul bereitgestellt wird, maschinenlesbare Information. Dadurch wird der Vorgang des Erfassens der Information mit entsprechenden Mitteln des mobilen Terminals erleichtert. In einer bevorzugten Ausführungsform ist die maschinenlesbare Information ein zweidimensionaler Matrixcode auslesbar durch eine Kamera im mobilen Terminal und/oder ein NFC-Chip auslesbar durch ein NFC-Lesemodul im mobilen Terminal ist.

Der zweidimensionale Matrixcode bezeichnet dabei eine flächige, in der Regel rechteckige Anordnung eines Hell-Dunkel-Musters (typischerweise ein Schwarz-Weiß-Muster zur Erhöhung des Kontrastes), dessen Hell-Dunkel-Struktur eine Codierung von Daten darstellt. Damit die kodierten Daten des Matrixcodes gelesen (decodiert) und damit erfasst werden können, ist das mobile Terminal mit einer typischen Kamera für solche portablen Geräte und einem geeigneten Leseprogramm (Decoder) ausgestattet. Ein Beispiel eines solchen Matrixcodes ist der sogenannte QR-Code, der aus einer quadratischen Matrix aus schwarzen und weißen Punkten besteht, die die kodierten Daten binär darstellt. Eine spezielle Markierung in drei der vier Ecken des Quadrats gibt die Orientierung des QR-Codes vor. Die Daten im QR-Code sind durch einen fehlerkorrigierenden Code geschützt. Dadurch kann der QR-Code selbst bei einem Verlust von bis zu 30 % des Codes noch gelesen (dekodiert) werden. Damit der QR-Code vom mobilen Terminal ausgelesen werden kann, umfasst dieses eine Kamera und einen Decoder für das mit der Kamera vom QR-Code aufgenommene bzw. erfasste Bild. Der QR-Code kann mit allen gängigen Verfahren problemlos auf das Identifikationsmodul gedruckt werden. Wie beim Strichcode ist allerdings auch hier ein möglichst hoher Kontrast wichtig, idealerweise schwarz auf weiß. Abhängig von den Möglichkeiten des verwendeten Lesegerätes (mobiles Terminal) ist auch eine inverse Darstellung möglich. Es ist auch möglich, den Code farbig zu drucken, auch mit mehreren Farben. Allerdings muss darauf geachtet werden, dass der QR-Code als Halbtonbild bzw. als Strichbild gesehen einen gleichmäßigen Kontrast aufweist. In der Darstellungsgröße ist dem QR-Code keine Grenze gesetzt, solange das Lesegerät das Bild formatfüllend und differenziert aufnehmen kann. In dem QR-Code kann ein Link intergriert sein. In einer Ausführungsform enthält der QR-Code eine Anweisung zur Ausführung der Transaktions-Applikation zur Erfassung der Information zur ersten Person und zur Übermittlung der Information an den Transaktionsserver. Der Fachmann kann in anderen Ausführungsformen auch andere Codes als zweidimensionalen Matrixcode auf dem Identifikationsmodul verwenden. Der Vorteil der Verwendung eines zweidimensionalen Matrixcodes als Träger der Information zur Identifikation der ersten Person ist die Möglichkeit der maschinellen Auslesung der Informationen, so dass manuelle Übertragungsfehler ausgeschlossen sind und eine schnelle Datenerfassung ermöglicht wird. Zusätzlich können Identifikationsmodule, die einen zweidimensionalen Matrixcode als Träger der Information umfassen, elektronisch erzeugt und elektronisch an die erste Person zum dortigen Ausdrucke und Anbringen verschickt werden, was eine sehr einfache und schnelle Versorgung der ersten Personen mit Identifikationsmodulen ermöglicht. Vorzugsweise erfolgt die Übermittlung des Identifikationsmoduls zusammen mit der ebenfalls an die erste Person zu übermittelnden Mehrzahl an Transaktionscodierungen. Mobile Terminals sind üblicherweise mit einer Kamera ausgerüstet, so dass der Matrixcode mit jedem üblichen mobilen Terimal zur Erfassung aufgenommen werden kann.

Der NFC-Chip bezeichnet einen Datenspeicher, der Daten mittels Nahfeld-Kommunikation (NFC) für entsprechende Lesegeräte zur Verfügung stellt. NFC ist ein internationaler Übertragungsstandard zum kontaktlosen Austausch von Daten über kurze Strecken. Die NFC-Technik basiert auf der Kombination aus Smartcard- und kontaktlosen Verbindungstechniken. Sie arbeitet in einem Frequenzbereich von 13,56 MHz und bietet eine Datenübertragungsrate von maximal 424 kBit/s bei einer Reichweite von nur 10 Zentimetern. Dies ist gewünscht, damit die Kontaktaufnahme als Zustimmung zu einer Transaktion gewertet werden kann. Das NFC-Lesemodul bezeichnet dabei ein entsprechendes Modul in dem mobilen Terminal, mit dem der NFC-Chip und damit die darauf gespeicherte Information zur ersten Person ausgelesen werden kann. Zum Auslesen der Daten wird das mobile Terminal in unmittelbarer Nähe vor das Identifikationsmodul mit NFC-Chip oder in direkten Kontakt zum Identifikationsmodul mit NCF-Chip gebracht. Die Transaktions-Applikation steuert dabei das NFC-Lesemodul in der Weise, dass die mit dem NFC-Lesemodul empfangenen Daten von der Transaktions-Applikation erfasst und falls diese Daten Informationen zur Identifikation einer ersten Person darstellen, diese dann an den Transaktionsserver übermittelt werden. Ob mittels NFC-Technik empfangene Daten solche Daten darstellen, kann aus der Datenstruktur und dem Dateninhalt geschlossen werden. Hierzu umfassen die Informationen zur Identifikation der ersten Person Bestandteile, die diese Daten als Daten geeignet zur Übermittlung an den Transaktionsserver charakterisieren. Der Vorteil der Verwendung eines NFC-Chips als Träger der Information zur Identifikation der ersten Person ist die Möglichkeit der maschinellen Auslesung der Informationen, so dass manuelle Übertragungsfehler ausgeschlossen sind und eine noch schnellere Datenerfassung als beim Matrixcode ermöglicht wird, da hier lediglich das mobile Terminal vor oder an das Identifikationsmodul ohne weitere Bedienungsschritte gehalten werden muss. Viele mobile Terminals sind heute bereits mit einem NFC-Lesemodul ausgerüstet.

In einer weiteren bevorzugten Ausführungsform ist das Identifikationsmodul ein Aufkleber geeignet zur Aufbringung am Geschäftspunkt der ersten Person, vorzugsweise umfassend den Matrixcode an der Oberfläche des Aufklebers und/oder ein NFC-Chip im oder am Aufkleber und/oder einen alphanummerischen Identifikationscode zur Eingabe im mobilen Terminal.

Der Begriff "Aufkleber" bezeichnet dabei jede Form mehr oder weiniger zweidimensionaler Informationsträger zum Darstellen der Information zur Identifikation der ersten Person. Durch den Aufkleber wird eine einfache Montierbarkeit des Identifikationsmoduls an vielen Bereichen, beispielsweise auf Fläche in der Nähe einer Kasse, Tür, Tresen etc. gewährleistet, vorzugsweise ebene Flächen. Der Aufkleber kann dabei an ebene Flächen geklebt werden. Vorzugsweise besitzt der Aufkleber eine adhäsive Schicht an seiner Rückseite. Die Rückseite bezeichnet hier die Seite, die nicht mit Matrixcodes oder alphanummerischen Zeichenketten als die Information bedruckt ist. Zusätzlich kann der Aufkleber durch geeignete Wahl von Farbe, Form und Größe so auffällig gestaltet werden, dass die zweite Person schnell Kenntnis vom Identifikationsmodul nimmt und daher die Übertragung der Information des Identifikationsmoduls schneller vornehmen kann. Der Aufkleber kann beispielsweise von einem Erzeugungsmodul als Teil des Transaktionssystems hergestellt werden, das die dafür notwendigen Daten vom Transaktionsserver übermittelt bekommt. Diese Übermittlung kann eine entsprechende Erzeugung des Aufklebers automatisch auslösen. Der Aufkleber wird dann an die erste Person auf dafür geeignete Art und Weise übermittelt, beispielsweise als Postsendung. Die postalischen Daten für die Zusendung werden vom Transaktionsserver aus den Nutzerdaten extrahiert und ebenfalls an das Erzeugungsmodul übermittelt.

In einer weiteren Ausführungsform wird die Information des Identifikationsmoduls entweder als zweidimensionaler Matrixcode mittels Betätigung der Kamera des mobilen Terminal aufgenommen und der aufgenommene Matrixcode automatisch von der vorher gestarteten Transaktions-Applikation als Reaktion auf die Betätigung der Kamera ausgewertet. Hierbei umfasst entweder die Transaktions-Applikation einen entsprechenden Decodierer oder die Transaktions-Applikation greift auf einen solchen auf dem mobilen Terminal installierten Decodierer zurück. Alternativ wird die Information des Identifikationsmoduls mittels des NFC-Lesemoduls des mobilen Terminals vom NFC-Chip ausgelesen und automatisch als Reaktion auf die durch den NFC-Chip bereitgestellte Information von der vorher gestarteten Transaktions-Applikation ausgewertet wird, oder der auf dem Identifikationsmodule angeordnete alphanummerische Identifikationscode wird in ein durch die Transaktions-Applikation bereitgestelltes Eingabefenster eingegeben. In den voranstehenden Fällen wird die auf dem mobilen Terminal durch die Transaktions-Applikation ausgewertete und/oder eingegebene bzw. erfasste Information an den Transaktionsserver übermittelt.

In einer Ausführungsform wird die Darstellung zumindest von Teilen der Transaktionscodierung zusammen mit den Daten zur Personenidentifikation der ersten Person auf dem Anzeigeelement des mobilen Terminals als elektronischer Beleg (Quittung) für die Transaktion zumindest durch die Transaktions-Applikation auf dem mobilen Terminal der zweiten Person gespeichert. Diese in einer entsprechenden elektronischen Datei abgespeicherte Information dient als elektronische Quittung der Transaktion. Die zweite Person zeigt der ersten Person diese Quittung und erhält beispielsweise im Anschluss daran von der ersten Person die mit diesem Verfahren bezahlte Ware. Außerdem kann die erste Person durch die Quittung eindeutig feststellen, dass die getätigte Transaktion eine Transaktion betrifft, die tatsächlich an die erste Person gerichtet ist. Dazu enthält die Quittung in einer Ausführungsform die vollständige Transaktionscodierung umfassend die ersten und zweiten Transaktionscodes dieser Transaktionskodierung, die während des Datenverkehrs zwischen mobilem Terminal und Transaktionsserver übermittelt wurde. Über den Vergleich mit der ersten Transaktionscodierung auf der Liste der Transaktionscodierungen kann die erste Person die Quittung zusammen mit den ebenfalls enthaltenen Daten zur Personenidentifikation noch einmal verifizieren. Die Darstellung der Quittung im Anzeigeelement erhöht damit die Transaktionssicherheit für die erste Person und kann gleichzeitig von der zweiten Person für nachfolgende Prozesse verwendet werden.

In einer Ausführungsform umfasst das Verfahren den weiteren Schritt eines Registrierens zumindest der ersten und zweiten Personen beim Transaktionssystem zur Erstellung von ersten und zweiten Nutzerdaten. Hierbei ist die Anzahl an ersten und zweiten Personen nicht beschränkt. Die Ausdrücke "erste Person" und "zweite Person" bezeichnen im Sinne der Erfindung nur die Rollenverteilung bei der Ausführung der Verfahrensschritte und stellen keine zahlenmäßige Beschränkung der Anzahl der Nutzer dar. Hierbei können beispielsweise die ersten und zweiten Nutzerdaten durch das Einlesen von Nutzerdatenbögen oder durch das Eingeben von Nutzerdaten anhand von Datenangaben durch die Nutzer (erste und zweite Personen) bei einer Anmeldung der Nutzer in das Transaktionssystem eingepflegt werden.

In einer bevorzugten Ausführungsform wird die Registrierung zumindest der ersten Person über eine Webseite des Transaktionssystems unter Angabe von Daten zumindest durch die erste Person durchgeführt. Beispielsweise aktiviert eine erste Person dazu ein internetfähiges Endgerät wie zum Beispiel ein Laptop, einen PC, ein Notebook oder ein Smartphone und öffnet in einem Browser die Zieladresse der Webseite des Transaktionssystems, wodurch durch Anklicken eines entsprechenden Feldes der Registrierungsprozess für das Transaktionssystem gestartet wird. Der Fachmann ist im Rahmen der vorliegenden Erfindung in der Lage, einen geeigneten Registrierungsprozess für das Transaktionssstem auf einer Webseite zur Verfügung zu stellen. Das Transaktionsystem kann beispielsweise als Netzwerk mit einem oder mehreren Transaktionsservern mit Internetverbindung oder zusätzlich ein oder mehrere Computer zur Bereitstellung der Webseite (in einem Webportal) umfassen, die mit dem oder den Transaktionsserver(n) und ggf. den weiteren Komponenten des Transaktionssystem verbunden sind. In einem Client-Server-Netzwerk stellen die Transaktionsserver die Server (Backend) dar, während die Computer, über die die ersten und/oder zweiten Personen die Webseite des Transaktionssystems bedienen, die Clients (Frontend) bilden. Wenn im Rahmen dieser Erfindung der Begriff "Transaktionsserver" verwendet wird, schließt dies immer die Möglichkeit der Verwendung von mehreren Transaktionsservern mit ein.

In einer Ausführungsform wird ein dreistufiger Registrierungsprozess durchlaufen, wobei in einem ersten Schritt persönliche Daten für die erste Person wie beispielsweise persönlicher Name und/oder Name einer Firma, die dazugehörige Adresse, gegebenenfalls Zusatzdaten wie Ansprechpartner in der Firma, Branche der ersten Person (z.B. Blumenladen, Bäckerei, Zeitungskiosk etc.), eine Markierung der Position der ersten Person / Firma auf einer virtuellen Landkarte (z.B. über eine in der Webseite eingebundene Google Maps-Applikation), eingegeben und zum Abschluss der Eingabe bestätigt wird. Bei der Eingabe der Branche werden der ersten Person in einer Ausführungsform durch die Webseite graphische Symbole angeboten, die die erste Person zur Kennzeichnung ihrer Branche auswählen kann. Das ausgewählte Symbol kann in dieser Ausführungsform zur Generierung einer Personenidentifikation oder als die Personenidentifikation für die erste Person, die als die Daten zur Personenidentifikation von Transaktionsserver an das mobile Terminal im Laufe des Verfahrens übermittelt werden, verwendet werden. Die Daten zur Personenidentifikation können beispielsweise als Teil in die später zu erstellenden Transaktionscodierungen aufgenommen werden, die selbst beispielsweise in einem Erzeugungsmittel zur Erzeugung von Transaktionscodierungen erzeugt und in einem Speicher, auf den das Erzeugungsmittel Zugriff hat, gespeichert und verwendet werden. In dieser Ausführungsform ist die Personenidentifikation für die erste Person eine graphische Personenidentifikation. Die Personenidentifikationen der ersten Personen können alternativ auch in den ersten Nutzerdaten in einer Nutzerdatenbank gespeichert werden, auf die das Erzeugungsmittel zur Erzeugung der Transaktionscodierungen und Aufnahme der Daten zur Personenidentifikation in die Transaktionscodierungen zurückgreift. In einer weiteren Ausführungsform kann die erste Person auch ein eigenes graphisches Symbol (z.B. ein Firmenlogo) über die Webseite in das Transaktionssystem als gewünschte Personenidentifikationen hochladen. Die Abspeicherung und der Zugriff auf die Daten zur Personenidentifikation können dann wie voranstehend beschrieben ausgestaltet sein. Jede erste Person besitzt dabei eine einzigartige Personenidentifikation, die sich von jeder anderen Personenidentifikation anderer erster Personen unterscheidet und somit eindeutige Daten zur Personenidentifikation darstellt.

Als zweiter Schritt der Registrierung können die für die Transaktionen relevanten Daten von der ersten Person über die Webseite in das Transaktionssystem eingegeben werden. Beispielsweise werden für eine Bezahlung eines Kaufpreises als die Transaktion die Kontodaten wie Name des Kontoinhabers, Name der Bank, wo das Konto unterhalten wird, die Kontonummer und die Bankleitzahl eingegeben. Zum Abschluss des zweiten Schritts werden die eingegebenen Daten von der ersten Person mittels Anklicken eines entsprechenden Feldes auf der Webseite bestätigt und an die Datenbanken, Speicherplätze und/oder den Transaktionsserver übermittelt. In einer Ausführungsform findet bei der Eingabe der transaktionsrelevanten Daten eine Plausibilitätsprüfung statt, um zu verhindern, dass die später freigegebene Transaktion aufgrund von fehlerhaften Nutzerdaten nicht durchgeführt werden kann.

Als dritter Schritt kann in einer Ausführungsform ein Benutzername mit einer entsprechenden Zugriffsberechtigung (Account) vergeben werden. Der Benutzername und die Zugriffsberechtigung (z.B. Passwort) werden in den Nutzerdaten gespeichert und an den Transaktionsserver übermittelt.

Nach Abschluss des Registrierungsprozesses (Registrierung) kann die erste Person aus ihrem dadurch aktivierten Account eine Mehrzahl an Transaktionscodierungen durch Anklicken eines entsprechenden Feldes auf der Webseite erzeugen. In einer Ausführungsform erzeugt alternativ das Transaktionssystem automatisch die Mehrzahl der Transaktionscodierungen für die registrierte erste Person zur Übermittlung an die erste Person nach Abschluss der Registrierung. Diese Mehrzahl an Transaktionscodierungen kann in Form einer elektronischen Liste, beispielsweise als elektronische Liste im pdf-Format, Word-Format oder Excel-Format, ausgestaltet sein, wobei die einzelnen Transaktionscodierungen jeweils eine Personenidentifikation für die erste Person umfassen. In einer weiteren Ausführungsform umfassen die Transaktionscodierungen des Weiteren einen ersten Transaktionscode und einen zweiten Transaktionscode, wobei sich jede der Transaktionscodierungen in dieser erzeugten Liste eindeutig zumindest durch unterschiedliche erste und/oder zweite Transaktionscodes von den anderen übermittelten Transaktionscodierungen unterscheidet. Das Format der ersten und zweiten Transaktionscodes kann vom Fachmann im Rahmen der vorliegenden Erfindung geeignet gewählt werden. In einer Ausführungsform sind erste und zweite Transaktionscodes graphische Codes wie beispielsweise graphische Symbole. Solche graphischen Codes (Symbole) sind leicht zu erkennen und zu kommunizieren, was eine reduzierte Fehlerrate bei der Übermittlung der Transaktionscodierungen und der anschließenden Freigabe der Transaktion (bzw. deren Verweigerung) ermöglicht. Es können aber auch graphischakustische Codes (Symbole) vergeben werden, die die Wiedererkennungsrate erhöhen bzw. die Fehlerrate reduzieren. Die Gestaltung der Liste an Transaktionscodierungen kann dabei im Rahmen der vorliegenden Erfindung unterschiedlich ausgeführt sein. Die erzeugten Transaktionscodierungen können beispielsweise als Liste mit Listenzeilen, Listenspalten und einem gemeinsamen allgemeinen Oberteil erzeugt werden, wobei im gemeinsamen Oberteil beispielsweise die Daten zu Personenidentifikation der ersten Person dargestellt sind. Da nach der Erfassung und Übermittlung der Informationen des Identifikationsmoduls die erste Person zur Ausführung der weiteren Verfahrensschritte festgelegt ist und mit dieser Person beispielsweise mehrere Transaktionen hintereinander durchgeführt werden könnten, benötigt eine solche Liste an Transaktionscodierungen nur eine einmalige Angabe der Personenidentifikation im Oberteil. Der Oberteil kann dabei in mehrere Bereiche mit zusätzlichen Angaben wie beispielsweise persönliche Daten etc. unterteilt sein. Die Liste der Transaktionscodierungen kann des Weiteren in einer ersten Spalte eine Nummerierung für die weiteren Kombinationen aus ersten und zweiten Transaktionscodes gemäß erster, zweiter, dritter, ... Transaktionscodierung enthalten, während in den zweiten und dritten Spalten die entsprechenden ersten und zweiten Transaktionscodes angegeben sind. Vorzugsweise sind die ersten und zweiten Transaktionscodes graphische Symbole, die eine sichere Verwendung dieser Liste durch die erste Person in ausgedruckter Form selbst aus einer gewissen Entfernung ermöglicht. Beispielsweise wird die Liste mit den Transaktionscodes hinter einem Ladentresen angebracht und die Angaben der graphischen ersten und zweiten Transaktionscodes auf der Liste mit denen des mobilen Terminals aus einer gewissen Entfernung zur Ausführung der weiteren Verfahrensschritte sicher verglichen, was bei einer reinen alphanummerischen Codierung zu einer hohen Fehlerrate bei der Dateneingabe (Ergänzung) im mobilen Terminal führen würde. Der Einsatz von graphischen Symbolen als erste und zweite Transaktionscodes (graphische Transaktionscodes) führt zu einer reduzierten Fehlerrate bei der Dateneingabe im Rahmen des erfindungsgemäßen Verfahrens und somit zu einer schnelleren Freigabe der Transaktion durch das Transaktionssystem. In einer Ausführungsform umfasst die Liste mit der Mehrzahl an Transaktionscodierungen mindestens eine weitere Spalte, beispielsweise angepasst zur Eintragung von Geldbeträgen für Zahlungen als Transaktionen. Diese Liste an Transaktionscodierungen kann eine unterschiedliche Anzahl an Transaktionscodierungen umfassen, beispielsweise 20 oder 100 unterschiedliche Transaktionscodierungen. Die Anzahl der Transaktionscodierungen kann je nach Ausführungsform durch das Transaktionssystem vorbestimmt werden oder von der ersten Person, beispielseise über ein entsprechendes Auswahlfeld auf der Webseite, so gewählt werden, wie es dem Bedarf der ersten Person entspricht.

In einer Ausführungsform kann die erste Person das Identifikationsmodul über die Webseite des Transaktionssystems anfordern oder gestalten. Hierzu kann die erste Person angeben, wie das Identifikationsmodul ausgestaltet werden soll, ob beispielsweise bestückt mit einem alphanummerischen Code und/oder einem Matrixcode und/oder einem NFC-Chip zur Bereitstellung der Information zur Identifikation der ersten Person. Anhand der Nutzerdaten kann der Transaktionsserver das Identifikationsmodul je nach Ausstattung in elektronischer Form oder als Postsendung an die erste Person übermitteln, beispielsweise zusammen mit den Transaktionscodierungen oder separat dazu auf gleiche oder andere Art und Weise.

Alternativ kann die Mehrzahl der Transaktionscodierungen der ersten Person als ausdruckbare Liste zur Verfügung gestellt werden. Das Ausdrucken kann beispielsweise über die Webseite durch Anklicken eines entsprechenden Druckfeldes vorgenommen bzw. initiiert werden. In einer Ausführungsform erfolgt die Übermittlung der Mehrzahl der Transaktionscodierungen durch das Transaktionssystem an die erste Person mittels Ausdrucken der Transaktionscodierungen auf einem Drucker der ersten Person. In einer alternativen oder ergänzenden Ausführungsform kann die Übermittlung der Transaktionscodierungen und gegebenenfalls auszuführende weitere Kommunikationen zwischen Transaktionssystem und erster Person über ein Smartphone der ersten Person erfolgen. Zu diesem Zweck ist eine entsprechende erste-Personen-Applikation auf dem Smartphone der ersten Person installiert, die eine Übermittlung erlaubt. Diese erste-Personen-Applikation kann der ersten Person beispielsweise über einem Applikationsspeicher zur Verfügung gestellt werden. Wird das Identifikationsmodul in elektronischer Form übermittelt, so kann die erste Person dies in gleicher Art und Weise wie die Transaktionscodierungen ausdrucken.

Die einmalige Registrierung der zweiten Person kann ebenfalls über die Webseite des Transaktionssystems unter Angabe von Daten durch die zweite Person durchgeführt werden. Beispielsweise aktiviert die zweite Person dazu ein internetfähiges Endgerät wie zum Beispiel ein Laptop, einen PC, ein Notebook oder ein Smartphone und öffnet in einem Browser die Zieladresse der Webseite des Transaktionssystems, wodurch durch Anklicken eines entsprechenden Feldes der Registrierungsprozess für das Transaktionssystem gestartet wird. Der Fachmann ist im Rahmen der vorliegenden Erfindung in der Lage, einen geeigneten Registrierungsprozess für das Transaktionssystem zur Verfügung zu stellen.

In einer alternativen Ausführungsform geschieht das Übermitteln der Transaktions-Applikation an das mobile Terminal der zweiten Person durch ein Herunterladen der Transaktions-Applikation beispielsweise über einen Direktlink des mobilen Terminals mit dem Browser der Webseite des Transaktionsystems oder von einer Webseite, die Applikationen zum Herunterladen anbietet (z.B. ein sogenannter Appstore). Die zweite Person installiert, beispielsweise nach dem Herunterladen, die Transaktions-Applikation auf dem mobilen Terminal. In einer bevorzugten Ausführungsform installiert sich die Transaktions-Applikation nach dem Herunterladen auf dem mobilen Terminal automatisch selbst. Diese automatische Installation kann auch erfolgen, wenn die Transaktions-Applikation alternativ beispielsweise von einem Speicherchip oder einer CD-ROM auf das mobile Terminal hochgeladen wurde. Zum Herunterladen der Transaktions-Applikation muss nicht zwingend eine vorangehende Registrierung der zweiten Person beim Transaktionssystem durchgeführt worden sein.

In einer Ausführungsform startet ein Erststart der installierten Transaktions-Applikation auf dem mobilen Terminal nach Aufbau einer drahtlosen Datenverbindung zum Transaktionsserver den Schritt des Registrierens für die zweite Person automatisch. In einer bevorzugten Ausführungsform werden Kontaktdaten zum Aufbau der drahtlosen Datenverbindung durch die Transaktions-Applikation automatisch zum Transaktionsserver übermittelt. Diese Registrierung der zweiten Person kann dabei aus einem mehrstufigen Registrierungsprozess bestehen. Die Transaktions-Applikation lädt zuerst ein Registrierungsformat vom Transaktionsserver herunter. Die zweite Person (z.B. der spätere Käufer einer Ware in einem Laden) gibt seinen Namen, E-Mail-Adress etc. in das elektronische Formular ein. Die Angabe einer postalischen Anschrift kann je nach Bezahlungsmethode z.B. bei einem elektronischen Lastschriftverfahren (ELV) erfoderlich sein. Die zweite Person muss für die Ausführung des Verfahrens über eine gültige E-Mail-Adresse verfügen, an die weitere Übermittlungen durch den Transaktionsserver später erfolgen können. Diese Angaben dienen zur Identifikation der zweiten Person im Transaktionssystem. Des Weiteren kann die zweite Person eine Zugangsberechtigung erstellen, beispielsweise eine vierstellige Sicherheits-PIN, wobei erst nach deren korrekter Eingabe die Transaktions-Applikation auf dem mobilen Terminal der zweiten Person zur Ausführung des erfindungsgemäßen Verfahren gestartet werden kann. Zum Abschluss des ersten Schritts werden dann die eingegebenen Daten von der zweiten Person mittels Anklicken eines entsprechenden Feldes auf dem elektronischen Formular bestätigt. Im nächsten Schritt kann die zweite Person ihre banktransaktionsrelevanten Daten in das elekronische Formular eingeben. Beispielsweise werden für eine Bezahlung eines Kaufpreises als die freizugebene Transaktion die Kontodaten wie Name des Kontoinhabers, Name der Bank, wo das Konto unterhalten wird, die Kontonummer und die Bankleitzahl angegeben. Die vorliegende Erfindung ist auch für alternative Zahlungssysteme nutzbar. Beispielsweise kann bei Giropay ein Guthaben für die Nutzung des erfindungsgemäßen Verfahrens aufgeladen werden. Zur Abwicklung der Zahlung müssten dann die notwendigen Daten für ein Login auf dem mobilen Bankkonto der ersten Person mit geheimen Nutzernamen und PIN eingegeben werden. Bei der gewünschten Verwendung von elektronischen Lastschriftverfahren könnten weitere Identifikationsmaßnahmen für die zweite Person erforderlich sein, weshalb weitere Daten in diesem Schritt für die zweiten Nutzerdaten eingegeben werden müssten. Die Zahlung erfolgt jeweils nach Freigabe durch das Transaktionssystem. Zum Abschluss des zweiten Schritts werden die eingegebenen Daten von der zweiten Person mittels Anklicken eines entsprechenden Feldes auf dem elektronischen Formular bestätigt. In einer Ausführungsform findet bei der Eingabe der relevanten Nutzerdaten eine Plausibilitätsprüfung statt, um zu verhindern, dass die später freigegebene Transaktion aufgrund von fehlerhaften Nutzerdaten nicht durchgeführt werden kann. Die eingegebenen Daten werden Schritt für Schritt oder als Gesamtheit an den Transaktionsserver übermittelt.

Zum Abschluss der Registrierung erhält die zweite Person eine E-Mail des Transaktionsservers, die einen sicheren Bestätigungslink enthält, dem die zweite Person folgt. Durch den Link gelangt die zweite Person auf eine nur für die individuelle zweite Person erzeugte sichere Webseite (spätere andere zweite Personen erhalten einen entsprechenden Link auf eine andere Webseite). Das Transaktionssystem identifiziert die zweite Person und ordnet die E-Mail-Adresse den zweiten Nutzerdaten zu. Das Transaktionssystem verfügt nun über vollständige zweite Nutzerdaten der zweiten Person. Der Registrierungsprozess endet hiermit. Ab nun kann die Transaktions-Applikation zur Ausführung des erfindungsgemäßen Verfahrens eingesetzt werden.

In einer weiteren Ausführungsform ermöglicht die Transaktions-Applikation die verifizierte Rücknahme der Transaktion über Bereitstellung eines Stornierungsverfahrens unter Verwendung einer der noch gültigen Transaktionscodierung aus der an die erste Person übermittelten Mehrzahl an Transaktionscodierungen. Die verifizierte Rücknahme bezeichnet dabei ein Verfahren, bei dem erste und zweite Person beteiligt sind, damit nicht eine der beiden Parteien alleine eine missbräuchliche Rücknahme veranlassen kann. Das Stornierverfahren bezeichnet ein Verfahren, bei dem eine durchgeführte Transaktion durch eine Gutschrift-Transaktion buchhalterisch saldiert wird. Dabei können nur bereits gebuchte positive Transaktionen storniert werden. - Der Begriff "Rücknahme" einer Transaktion bedeutet hier, dass die betreffende Transaktion zwar im System als solche gespeichert bleibt, deren Folgen aber zurückgenommen werden, beispielsweise durch eine die Transaktion ausgleichende Gutschrift. Nach einer solchen Gutschrift verbleibt die damit "zurückgenommene" Transaktion im System gebucht und wird buchhalterisch durch die Gutschrift ausgeglichen.

In einer bevorzugten Ausführungsform umfasst das Stornierungsverfahren (SV) die folgenden Schritte:
- Übermitteln einer Stornierungsanfrage für eine bestimmte Transaktion durch die Transaktions-Applikation nach entsprechender Eingabe auf dem mobilen Terminal an den Transaktionsserver,
- Übermitteln eines Stornierungsidentifikationscodes, der eine bestimmten Transaktionscodierung innerhalb der an die erste Person übermittelten Mehrzahl an Transaktionscodierungen bezeichnet, wobei jede der Transaktionscodierung erste und zweite Transaktionscodes umfasst, die sich eindeutig von den ersten und/oder zweiten Transaktionscodes anderer Transaktionscodierungen unterscheiden, und Darstellen dieses Stornierungsidentifikationscodes im Anzeigeelement,
- Eingabe der ersten und zweiten Transaktionscodes, vorzugsweise graphische Transaktionscodes, von der durch den übermittelten Stornierungsidentifikationscode bezeichneten Transaktionscodierung in das mobile Terminal mit Hilfe der ersten Person anhand der an die erste Person übermittelten Mehrzahl an Transaktionscodierungen, die die durch den Stornierungsidentifikationscode bezeichnete Transaktionscodierung umfasst,
- Übermitteln der eingegebenen ersten und zweiten Transaktionscodes an den Transaktionsserver,
- Verifizieren der Rücknahme der bestimmten Transaktion durch den Transaktionsserver über einen Vergleich der vom mobilen Terminal übermittelten ersten und zweiten Transaktionscodes mit der den Nutzerdaten der ersten Person und dem Stornierungsidentifikationscode zugeordneten gespeicherten Transaktionscodierung umfassend die dafür gespeicherten ersten und zweiten Transaktionscodes, und
- Rücknahme der Transaktion im Falle eines positiven Vergleichs durch Erzeugen einer Storno-Gutschrift.

Dazu kann die zweite Person in einer Ausführungsform beispielsweise den Sicherheits-PIN zur Freischaltung der voranstehenden Verfahrensschritte für die Stornierung eingeben. Dazu wählt die zweite Person (Kunde) aus einem Menü der Transaktions-Applikation ein entsprechendes Feld aus, gibt den Sicherheits-PIN ein und bestätigt die Eingabe. Diese Eingabe wird dann durch den Transaktionsserver oder die Transaktions-Applikation verifiziert. In einer Ausführungsform macht die zweite Person anschließend weitere Eingaben zur rückzunehmenden bzw. zur zu stornierenden Transaktion in entsprechend durch die Transaktions-Applikation im Anzeigeelement angebotene Felder. Nach der Bestätigung übermittelt die Transaktions-Applikation automatisch die Transaktionsdaten als Stornierungsanfrage an den Transaktionsserver. In einer bevorzugten Ausführungsform wird der elektronische Beleg für die bestimmte Transaktion als Stornierungsanfrage an den Transaktionsserver übermittelt, der zuvor durch die Transaktions-Applikation im mobilen Terminal gespeichert wurde. In einer Ausführungsform kann die zweite Person nach Aufruf des Storierungsverfahrens die abgespeicherten elektronischen Belege (Quittungen) nach dem Beleg der rückzunehmenden Transaktion durchsuchen und den entsprechenden elektronischen Beleg für die Stornierungsanfrage auswählen.

Nach Übermittlung der Stornierungsanfrage an den Transaktionsserver wählt dieser daraufhin eine noch gültige Transaktionscodierung (eine Transaktionscodierung ohne einen enstprechenden gesetzten "ungültig"-Marker) aus der Mehrzahl der an die erste Person übermittelten Transaktionscodierungen aus. Die Transaktioonscodierungen umfassen dazu neben den Transaktionscodes und den Daten zur Identifikation der ersten Person jeweils einen laufende oder charakterisierende Nummer/Buchstaben als Bezeichnung. Diese Bezeichnung wird der zweiten Person als Stornierungsidentifikationscode übermittelt und von der Transaktions-Applikation im Anzeigeelement des mobilen Terminals deutlich sichtbar dargestellt. Im Beispiel einer "49" als Stornierungsidentifikationscode zeigt die zweite Person die dargestellte Nummer "49" der ersten Person oder nennt sie der ersten Person. Gleiches gilt für andere Bezeichnungen als Stornierungsidentifikationscodes, beispielsweise als Code "B" oder anderes. In der Liste der Transaktionscodierungen, die die erste Person vom Transaktionsserver erhalten hatte, ist diese Transaktionscodierung mit Bezeichnung "49" (oder "B") vorhanden. Die Transaktionscodierungen umfassen in dieser Ausführungsform einen ersten und einen zweiten Transaktionscode, wobei sich alle Transaktionscodierungen, die der ersten Person übermittelt wurden, durch den ersten und/oder zweiten Transaktionscode unterscheiden. Vorzugsweise sind die ersten und zweiten Transaktionscodes graphische Symbole, die ein Übermitteln einfach, gut visuell erkennbar und daher sicherer vor Verwechselungen machen. Die erste Person nennt der zweiten Person gemäß dem Stornierungsidentifikationscode die entsprechenden ersten und zweiten Transaktionscodes aus dem Liste der Transaktionscodierung, die alle mit unterschiedlichen Stornierungsidentifikationscode bezeichnet sind, so dass die zweite Person die entsprechenden richtigen, zu dieser Transaktionscodierung gehörigen Transaktionscodes in das mobile Terminal eingeben kann. Die Transaktions-Applikation übermittelt diese eingegebenen Transaktionscodes an den Transaktionsserver, der daraufhin überprüft, ob die eingegebenen Transaktionscodes den Transaktionscodes entsprechen, die in der Nutzerdatenbank bei den an die erste Person übermittelten Transaktionscodierungen in der Transaktionscodierung enthalten sind, die mit dem an das mobile Terminal übermittelten Stornierungsidentifikationscode bezeichnet ist. Um den Vergleich durchführen zu können, markiert der Transaktionsserver die Transaktionscodierung in der Liste der gespeicherten Transaktionscodierungen, deren Bezeichnung als Stornierungsidentifikationscode dem mobilen Teriminal übermittelt wurde. Dieser Vergleich entspricht der Verifikation der Stornierung bzw. Rücknahme der Transaktion. Ergibt der Vergleich eine Übereinstimmung zwischen den erwarteten Transaktionscodes für die markierte Transaktionscodierung in der Liste der Transaktionscodierungen im Transaktionssystem und den über das mobile Terminal eingegebenen Transaktionscodes, so ist der Vergleich positiv und die Transaktion wird zurückgenommen (storniert). Anderfalls sendet der Transaktionsserver eine entsprechende Fehlermeldung an das mobile Terminal. Sind beispielsweise mindestens 10 unterschiedliche erste und mindestens 10 unterschiedliche zweite Transaktionscodes im Gebrauch zur Gestaltung der Transaktionscodierungen, so ist ein Missbrauch des Stornierungsverfahrens durch die zweite Person durch unbefugtes Erraten der richtigen Transaktionscodes für eine von der ersten Person nicht gewollten oder erlaubten Stornierung der Transaktion nahezu ausgeschlossen. Um die Sicherheit gegen unbefugtes Stornieren weiter zu erhöhen, kann die Anzahl der Eingabeversuche von Transaktionscodes für ein Stornierungsanfrage begrenzt werden, beispielsweise auf 3 Eingabeversuche. Das Erreichen der maximal erlaubten Eingabezahl für die beiden Transaktionscodes kann durch den Transaktionsserver aufgezeichnet werden, so dass bei der maximalen Anzahl negativer Vergleich die Stornierung zu der betreffenden Stornierungsanfrage durch den Transaktionsserver blockiert wird. In diesem Fall ist eine Stornierung nur noch manuell durch den Kundenservice direkt möglich.

In einer Ausführungsform erfolgt die Eingabe der ersten und zweiten Transaktionscodes in das mobile Terminal mittels Auswahl aus einer im Anzeigelement dargestellten Anzahl an möglichen ersten und zweiten Transaktionscodes. Vorzugsweise sind zu dieser Auswahl die ersten und zweiten Transaktionscodierungen jeweils auf ersten und zweiten virtuellen, durch entsprechende Bedienung drehbaren Trommeln im Anzeigelement angeordnet. Eine Trommel kann im Prinzip beliebig viele unterschiedliche Transaktionscodes nacheinander darstellen, so dass die Systemsicherheit bei gleichzeitiger Übersichtlichkeit stark erhöht werden kann. Die Auswahl zweier bestimmter Codes mit zwei solcher Trommeln ist außerdem für den Nutzer bedienerfreundlich.

In einer Ausführungsform des Verfahrens sendet das Transaktionssystem am Ende eines jeden Tages eine automatische E-Mail an die zweite Person, die die an diesem Tag von der zweiten Person getätigten Transaktionen als Nachweis mit erster Person und Uhrzeit auflistet. Durch die automatische Rückmeldung an die zweite Person behält diese einen dokumentierten Überblick über die getätigten Transaktionen. Außerdem wird dadurch das Risiko eines Missbrauchs minimiert. Bei fehlerhaften Transaktionen kann die zweite Person sich gegebenenfalls an das Transaktionssystem und/oder an die erste Person zur Klärung wenden. Das Transaktionssystem speichert dabei die Transaktionscodierungen, die für Freigaben bereits verwendet wurden. Somit ist eine erneute Übermittlung eines ersten Teils einer Transaktionscodierung an ein mobiles Terminal einer zweiten Person, der bereits zuvor an die gleiche oder an eine andere zweite Person für die Freigabe einer anderen Transaktion übermittelt wurde, ausgeschlossen. Somit kann jede Transaktionscodierung nur einmal für eine Freigabe verwendet werden, was die Sicherheit der Freigaben weiter erhöht.

Die Erfindung betrifft des Weiteren eine Transaktions-Applikation gespeichert auf einem Speichermedium, die geeignet ist, das erfindungsgemäße Verfahren in Verbindung mit einem erfindungsgemäßen Transaktionssystem auszuführen. Die Transaktions-Applikation kann dabei auf externen Datenträgern wie beispielsweise SIM-Karte, Chips, Speichersticks, CD-ROMs etc. zur zweiten Person zur Installation auf dem mobilen Terminal übermittelt werden, oder die zweite Person kann die Transaktions-Applikation vom Transaktionssystem selbst oder von einer Webseite, die Applikationen vertreibt, herunterladen. Da die Transaktions-Applikation etliche wesentliche Bestandteile der Transaktionsfreigabe durchführt, besteht für die Transaktions-Applikation ein eigenes Schutzbedürfnis.

Die Erfindung betrifft des Weiteren ein mobiles Terminal mit einem Anzeigeelement, das mit einem Transaktionsserver eines erfindungsgemäßen Transaktionssystems über eine drahtlose Datenverbindung zu einem Datenaustausch verbindbar ist und auf dem eine erfindungsgemäße Transaktions-Applikation zur Ausführung auf dem mobilen Terminal installiert ist und auf dem mobilen Terminal ausgeführt werden kann. Der Begriff "mobiles Terminal" umfasst hierbei alle Geräte mit einem Anzeigeelement, die eine drahtlose Datenverbindung mit dem Transaktionsserver unterhalten können und applikations- und E-Mail-fähig sind, wie beispielsweise ein Smartphone. Die drahtlose Datenverbindung kann beispielseise über ein Mobilfunknetz oder ein WLAN-Netz erfolgen. In einer Ausführungsform umfasst dabei das mobile Terminal eine Kamera geeignet zur Aufnahme zweidimensionaler Matrixcodes und/oder ein NFC-Lesemodul geeignet zum Auslesen eines NFC-Chips. Mit einem solchen mobilen Terminal kann die Information zur Identifikation der ersten Person einfach, fehlerfrei und schnell aus dem Identifikationsmodul ausgelesen werden.

Die Erfindung betrifft des Weiteren ein Transaktionssystem zur Freigabe einer Transaktion im Rahmen eines Geschäfts zumindest zwischen einer ersten und einer zweiten Person umfassend einen Applikationsspeicher zum Speichern einer erfindungsgemäßen Transaktions-Applikation, eine Nutzerdatenbank zur Speicherung zumindest erster Nutzerdaten der ersten Person und zweiter Nutzerdaten der zweiten Person, ein Erzeugungsmittel zur Erzeugung von Transaktionscodierungen, bevorzugt umfassend einen ersten Transaktionscode und einen zweiten Transaktionscode, besonders bevorzugt sind der erste und zweite Transaktionscodes graphische Transaktionscodes, mindestens ein Identifikationsmodul zum Bereitstellen von Informationen zur Identifikation der ersten Person an dem Geschäftspunkt der ersten Person, und einen zumindest mit dem Applikationsspeicher, der Nutzerdatenbank und dem Erzeugungsmittel über Datenleitungen verbundener und mit einem mobilen Terimnal der zweiten Person verbindbarer Transaktionsserver, der dazu ausgestaltet ist
- zumindest die ersten und zweiten Nutzerdaten bereitzustellen,
- mit geeigneten Datenübertragungsmitteln einer Mehrzahl an erzeugten Transaktionscodierungen an die erste Person zu übermitteln, wobei sich jede der übermittelten Transaktionscodierungen eindeutig von den anderen übermittelten Transaktionscodierungen unterscheidet, und
- eine drahtlose Datenverbindung mit einem mobilen Terminal der zweiten Person herzustellen,
- wobei das mobile Terminal dazu ausgestaltet ist, nach dem Starten der auf dem mobilen Terminal installierten Transaktions-Applikation die Informationen des Identifikationsmoduls zu erfassen und automatisch eine Verbindung mit dem Transaktionsserver herzustellen und automatisch die Information des Identifikationsmoduls an den Transaktionsserver mittels der Transaktions-Applikation als Reaktion auf die mittels des mobilen Termials erfassten Information des Identifikationsmoduls zu übermitteln, woraufhin der Transaktionsserver dazu ausgestaltet ist, Daten zur Personenidentifikation der ersten Person an das mobile Terminal der zweiten Person nach erfolgter Verifikation der ersten Person durch den Transaktionsserver basierend auf an den Transaktionsserver übermittelten Informationen zu übermitteln, wobei
- das mobile Terminal und die Transaktions-Applikation dazu ausgestaltet sind, eine Eingabe transaktionsrelevanter Daten in das mobile Terminal und eine Übermittlung zumindest dieser transaktionsrelevanter Daten vom mobilen Terminal an den Transaktionsserver zu ermöglichen,
- der Transaktionsserver dazu ausgestaltet ist, daraufhin eine gültigen Transaktionscodierung aus der Mehrzahl der Transaktionscodierungen, die im Transaktionssystem den Nutzerdaten der ersten Person zugeordnet sind an das mobile Terminal als Reaktion auf die an den Transaktionsserver übermittelten transaktionsrelevanten Daten zu übermitteln und die übermittelte gültige Transaktionscodierung in der Mehrzahl der gespeicherten Transaktionscodierungen als eine ungültige Transaktionscodierung für nachfolgende Transaktionen zu markieren, und
- die Transaktions-Applikation und das mobile Terminal dazu ausgestaltet sind, zumindest Teile der übermittelten gültigen Transaktionscodierung zusammen mit den Daten zur Personenidentifikation der ersten Person auf dem Anzeigeelement des mobilen Terminals darzustellen, um einen visuellen Vergleich der dargestellten Transaktionscodierung und der Daten zur Personenidentifikation der ersten Person mit den vom Transaktionsserver an die erste Person übermittelte Mehrzahl an Transaktionscodierungen und damit einen Abschlusses der Transaktion durch die erste Person zu ermöglichen.

In einer Ausführungsform ist der Transaktionsserver dazu ausgestaltet, mit geeigneten Datenübertragungsmitteln die Transaktions-Applikation an ein mobiles Terminal der zweiten Person zu übermitteln. Diese direkte Übermittlung vermeidet zusätzliche Benutzerhandlungen für die Inbetriebnahme der Transaktions.-Applikation und ist daher benutzerfreundlich. Vorzugsweise installiert sich die Transaktions-Applikation nach der Übermittlung direkt selber auf dem mobilen Terminal. Vorzugsweise übermittelt die Transaktions-Applikation die Verbindungsdaten zum mobilen Terminal an den Transaktionsserver. Hiermit kann zugleich die benötigte drahtlose Verbindung zwischen dem mobilen Terminal und dem Transaktionsserver verifiziert werden.

In einer Ausführungsform umfasst das Transaktionssystem eine Webseite zum Registrieren zumindest der ersten Person beim Transaktionssystem und zur Eingabe von Daten zumindest durch die erste Person zur Erstellung von ersten Nutzerdaten. Die Webseite zur Registrierung kann aber auch von weiteren Personen zu einer entsprechenden Registrierung verwendet werden. Vorzugsweise registrieren sich die zweiten Personen aber über die Transaktions-Applikation nach deren Erststart auf dem mobilen Terminal.

Ein Vorteil des erfindungsgemäßen Transaktionssystems ist die minimale Anzahl an benötigten elektronischen Geräten auf Seiten der ersten und zweiten Personen, wie voranstehend beschrieben. Die erste Person benötigt lediglich eine Mehrzahl an Transaktionscodierungen, übermitelt durch das Transaktionssystem. Die Art und die Weise, wie die erste Person diese Liste empfängt bzw. erhält, können unterschiedlich ausgestaltet sein. Diese Übermittlung kann zu einem elektronischen Gerät der ersten Person, beispielsweise einem internetfähigen Laptop, Computer, Smartphone etc erfolgen. Alternativ kann das Transaktionssystem die Mehrzahl an Transaktionscodierungen auch als Liste in Papierform der ersten Person mittels eines Postdienstes schicken, so dass für den Empfang der Liste überhaupt kein elektronisches Gerät auf Seiten der ersten Person benötigt wird. Für die Freigabe einer Transaktion bei vorhandenen ersten und zweiten Nutzerdaten wird mit dem erfindungsgemäßen Verfahren nur ein mobiles Gerät mit einer Datenverbindung zum Transaktionsserver der zweiten Person benötigt. Damit kann das Transaktionssystem von jeder ersten Person unabhängig von ihrer gerätemäßigen Ausstattung verwendet werden. Damit ist das erfindungsgemäße Verfahren insbesondere vorteilhaft für erste Personen, die ein kleines, ggf. räumlich enges Geschäft betreiben und dennoch den Kunden (zweite Personen) einen erhöhten Service durch die Ermöglichung von elektronischen Transaktionsfreigaben bieten wollen, beispielsweise bargeldlosen Bezahlungen. Da das Verfahren die Durchführung aller Arten von Transaktionen, insbesondere alle Arten von unterschiedlichen Zahlungssystemen und Zahlungsweisen mittels Freigabe und ggf. weiterer Unterstützung durch nachfolgende Ausführung bzw. Anweisung der Transaktion bei an der Transaktion beteiligten Dritten (z.B. die Banken von erster und zweiter Person) unterstützt, ist es auch für die zweiten Personen vorteilhaft. Sie können beispielsweise bargeldlos dort bezahlen, wo es wegen der mangelnden Ausstattung der ersten Personen bisher nicht möglich war.

Die Erfindung betrifft des Weiteren ein Bezahlsystem mit einem erfindungsgemäßen Transaktionssystem, mindestens einem erfindungsgemäßen mobilen Terminal, das mit dem Transaktionsystem über eine drahtlose Datenverbindung zur Ausführung eines erfindungsgemäßen Verfahrens verbunden ist, und mit mindestens einem Geldverwaltungssystem, das mit dem Transaktionssystem verbunden ist, um die Transaktion zwischen erster und zweiter Person nach Freigabe durch das Transaktionssystem auszuführen, wobei die Freigabe an das Geldverwaltungssystem durch das Transaktionssystem als Reaktion auf die an das mobile Terminal übermittelte gültige Transaktionscodierung erfolgt. Geldverwaltungssysteme im Sinne der vorliegenden Erfindung sind beispielsweise Banken, bei denen erste und zweite Personen Konten unterhalten. Im dem erfindungsgemäßen Bezahlsystem kann beispielsweise die erste Person so auch ein elektronisches Kassenbuch führen. Dazu sendet das Transaktionssystem eine Auflistung der erfolgten Transaktionen mit Angaben zu den Transaktionsdaten (beispielsweise zu verbuchender Betrag einer bargeldlosen Zahlung infolge der freigegebenen Transaktion, Uhrzeit etc) zu den zweiten Personen. Die erste Person kann diese Auflistung als elektronische Liste an Soll-Transaktionen (beispielsweise Soll-Zahlungen) vom Transaktionssystem erhalten und die tatsächlich auf dem Konto der ersten Person eingegangenen Beträge in diese Liste in entsprechende Felder eintragen. Auf diese Weise kann die erste Person ein elektronisches Kassenbuch führen. Dieses elektronische Kassenbuch wird beispielsweise unter den Account der ersten Person auf der Webseite des Transaktionssystems bereitgestellt. Die erste Person benötigt für die Führung eines elektronischen Kassenbuchs lediglich genau die gleichen technischen Geräte, die die erste Person zur Übermittlung der Mehrzahl an Transaktionscodierung auch benötigt. Alternativ kann das elektronische Kassenbuch auch mit Hilfe der erste-Personen-Applikation auf einem Smartphone der ersten Person geführt werden.

### Kurze Beschreibung der Abbildungen

Diese und andere Aspekte der Erfindung werden im Detail in den Abbildungen wie folgt gezeigt.
- Fig.1:: eine Ausführungsform des erfindungsgemäßen Transaktionssystems.
- Fig.2:: eine Ausführungsform der zu übermittelnden Transaktionscodierungen.
- Fig.3:: eine Ausführungsform der Erfassung der Informationen zur Identifikation der ersten Person anhand des Identifikationsmoduls.
- Fig.4:: eine Ausführungsform des mobilen Terminals zur Eingabe der transaktionsrelevanten Daten.
- Fig.5:: eine Ausführungsform des mobilen Terminals und der Darstellung der gültigen Transaktionscodierung zum Abschluss der Transaktion.
- Fig.6:: eine Ausführungsform des mobilen Terminals für das erfindungsmäße Stornierungsverfahren.
- Fig.7:: eine Ausführungsform der im Anzeigeelement des mobilen Terminals dargestellten Transaktionscodes und deren Auswahl im Anzeigelement.
- Fig.8:: eine Ausführungsform des erfindungsgemäßen Verfahrens.
- Fig.9:: eine Ausführungsform des Stornierungsverfahrens.
- Fig.10:: eine Ausführungsform des Registrierungsverfahrens im erfindungsgemäßen Verfahren.
- Fig.11:: eine Ausführungsform eines Bezahlsystems mit erfindungsgemäßen Transaktionssystem und Geldverwaltungssystem zur Ausführung der Transaktion nach erfindungsgemäßer Freigabe.

### Detaillierte Beschreibung der Ausführungsbeispiele

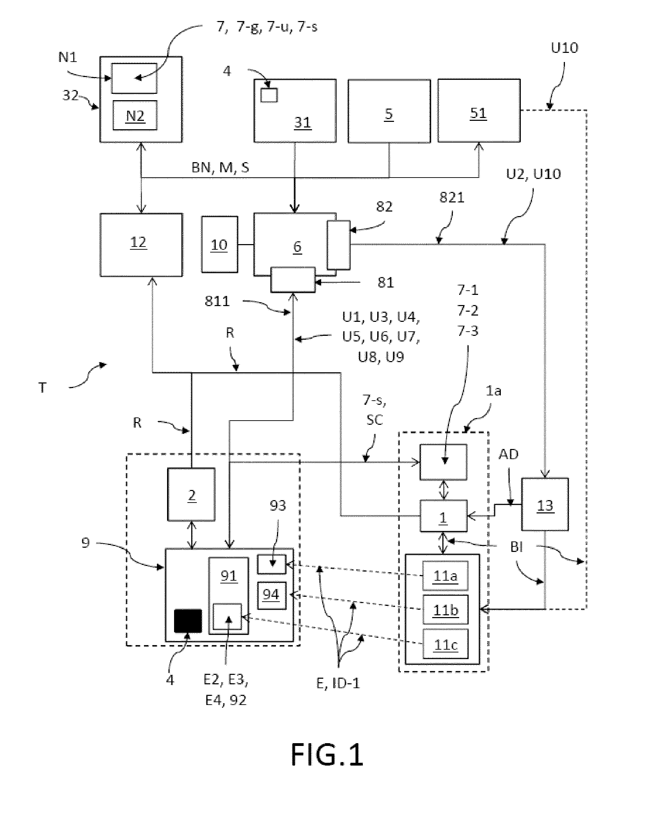

Fig. 1 zeigt eine Ausführungsform des erfindungsgemäßen Transaktionssystems T in Verbindung mit einem mobilen Terminal 9 einer zweiten Person 2 und einer darauf installierten Transaktions-Applikation 4 zur Freigabe einer Transaktion im Rahmen eines Geschäfts zumindest zwischen einer ersten und einer zweiten Person 1, 2. Die Datenverbindung zwischen Transaktionssystem T und dem mobilen Terminal 9 der zweiten Person 2 wird über eine drahtlose Datenverbindung 811 zum Transaktionsserver 6 mit entsprechenden Datenübertragungsmitteln 81 hergestellt. Damit das Transaktionssystem T das erfindungsgemäße Verfahren ausführen kann und nach Freigabe der Transaktion diese Transaktion auch veranlassen kann, benötigt das Transaktionssystem T Nutzerdaten N1, N2 für die ersten und zweiten Personen 1, 2, auf die der Transaktionsserver 6 über Datenverbindungen zwischen den Komponenten des Transaktionssystems T zurückgreifen kann. Damit die Nutzerdaten N1, N2 in das Transaktionssystem T eingegeben werden können, umfasst es in dieser Ausführungsform eine Webseite 12 zum Registrieren R zumindest der ersten Person 1 beim Transaktionssystem T und zur Eingabe von Daten durch zumindest die erste Person 1 zur Erstellung von ersten Nutzerdaten N1. Diese Webseite 12 wird beispielsweise vom Transaktionsserver 6 über das Internet oder auf Client-Computern, die mit dem Transaktionsserver 6 verbunden sind, bereitgestellt. Die Webseite 12 ist auch zur Registrierung R der zweiten Person 2 zur Eingabe von Nutzerdaten N2 für die zweite Person 2 geeignet. Alternativ können die zweiten Nutzerdaten N2 auch vom mobilen Terminal 9, gegebenenfalls bei Ausführung der Transaktions-Applikation 4 an den Transaktionsserver 6 über eine drahtlose Datenverbindung 811 über das Übertragungsmittel 81 zum Transaktionsserver 6 übermittelt werden. Die Nutzerdaten N1, N2 werden in einer Nutzerdatenbank 32 im Transaktionssystem T gespeichert, worauf der Transaktionsserver 6 über Datenverbindungen Zugriff hat.

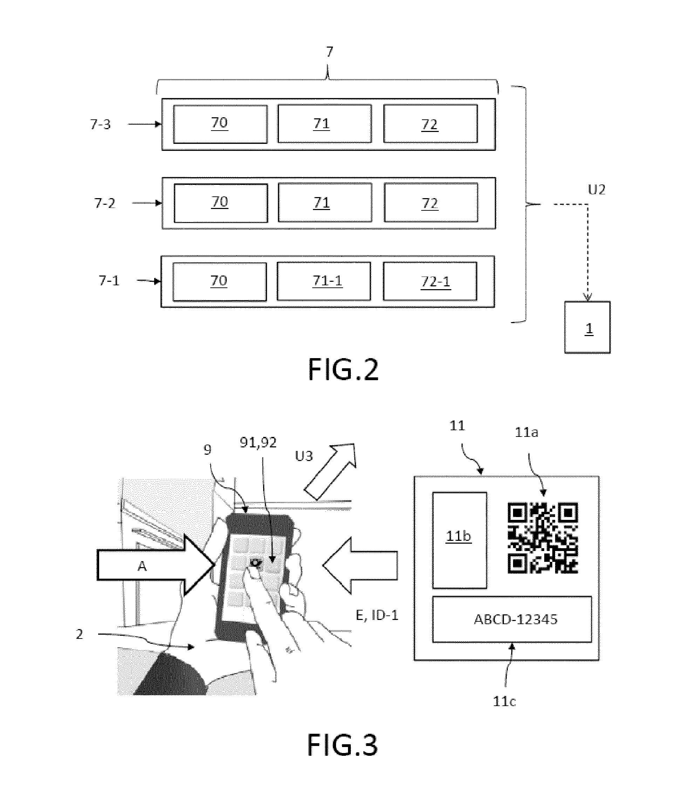

Der Transaktionsserver 6 ist in dieser Ausführungsform zusätzlich über ein Datenübertragungsmittel 82 und über eine Datenverbindung 821 mit einem Drucker 13 der ersten Person 1 verbunden. Über diese Datenverbindung 821 wird in dieser Ausführungsform eine Mehrzahl (7-1, 7-2, 7-3, ...) von Transaktionscodierungen 7 vom Transaktionsserver 6 an die erste Person übermittelt U2. Vorzugsweise erfolgt die Übermittlung U2 der Mehrzahl der Transaktionscodierungen 7 an die erste Person 1 mittels Ausdrucken AD der Transaktionscodierungen 7 auf dem Drucker 13 der ersten Person 1. Die Transaktionscodierungen 7 werden mit einem Erzeugungsmittel 5 erzeugt, das zur Übermittlung der Transaktionscodierungen 7 mit dem Transaktionsserver 6 über eine Datenleitung verbunden ist. In einer Ausführungsform umfassen die Transaktionscodierungen 7 jeweils eine Personenidentifikation 70 für die erste Person 1, einen ersten Transaktionscode 71, vorzugsweise einen graphischen ersten Transaktionscode 71, und einen zweiten Transaktionscode 72, vorzugsweise einen graphischen zweiten Transaktionscode 72, wie im Detail noch in Abbildung 2 dargestellt ist. Jede der an die erste Person 1 übermittelten U2 Transaktionscodierungen 7 unterscheidet sich eindeutig zumindest durch unterschiedliche erste und/oder zweite Transaktionscodes 71, 72 von den anderen übermittelten Transaktionscodierungen 7. Die an die erste Person übermittelten Mehrzahl der Transaktionscodierungen 7 werden im Transaktionssystem T gespeichert und zu den ersten Nutzerdaten N1 der ersten Person 1 zugeordnet. Dies gilt für alle unverbrauchten, noch gültigen Transaktionscodierungen 7-g, für alle als nach einer Transaktion als ungültig markierten Transaktionscodierungen 7-u und für alle für etwaige Stornierverfahren verwendete Transaktionscodierungen 7-s.

Der Applikationsspeicher 31 ist außerdem zum Speichern der Transaktions-Applikation 4 vorgesehen, damit diese vom Transaktionssystem T über den Transaktionsserver 6 heruntergeladen oder auf eine andere Weise zum mobilen Terminal 9 übertragen werden kann, um dann auf diesem installiert zu werden, um das erfindungsgemäße Verfahren durchführen zu können. Dazu ist der Transaktionsserver 6 mit geeigneten Datenübertragungsmitteln 81 ausgestattet, um die Transaktions-Applikationan 4 über die drahtlose Datenverbindung 811 an das mobile Terminal 9 der zweiten Person 2 zu übermitteln U1. Über diese Datenverbindung 811 übermittelt U4 der Transaktionsserver 6 auch die Daten 70 zur Personenidentifikation der ersten Person 1 nach Übermittlung U3 der erfassten Informationen zur Identifikation der ersten Person. Die Information ID-1 zur Identifikation der ersten Person 1 wird durch das Identifikationsmodul 11 bereitgestellt wird. Diese Information ID-1 kann dabei maschinenlesbare Information umfassen, wie näher in Fig.3 dargestellt ist. Die Information ID-1 des Identifikationsmoduls 11 liegt entweder als zweidimensionaler Matrixcode 11a, der mittels einer Kamera 93 des mobilen Terminal 9 erfasst werden kann, oder ist in einem NFC-Chip 11 b gespeichert, der mittels des NFC-Lesemoduls 94 des mobilen Terminals 9 ausgelesen werden kann, oder ist auf dem Identifikationsmodule 11 als alphanummerischer Identifikationscode 11 c angeordnet und kann in ein bereitgestelltes Eingabefenster 92 des mobilen Terminals eingegeben werden und wird durch die Transaktions-Applikation 4 ausgewertet bzw. erfasst und an den Transaktionsserver 6 übermittelt U3. Das Identifikationsmodul 11 kann dabei vom Transaktionssystem T an die erste Person 1 über den Postweg oder elektronisch zum Ausdrucken mittels des Druckers 13 an die erste Person 1 übermittelt U10 werden. Vorzugsweise wird das Identifikationsmodul 11 zusammen mit der Mehrzahl an Transaktionscodierungen 7-1, 7-2, 7-3, ..., an die erste Person 1 übermittelt. Hierzu kann der Transaktionsserver 6 anhand der Nutzerdaten N1 ein Identifikationsmodul 11 erstellen, dass entweder von Transaktionsserver 6 elektronisch an die erste Person 1 übermittelt U10 wird oder der Transaktionsserver 6 veranlasst ein Erzeugungsmodul 51 zur Erzeugung des Identifikationsmodul 11, beispielsweise mit einem Chip, der in das Identifikationsmodul 11 als Träger der Information ID-1 zur Identifizierung der ersten Person 1 integriert ist.

Das mobile Terminal 9 ist dazu ausgestaltet, nach dem Erfassen E der Information ID-1 automatisch eine Verbindung mit dem Transaktionsserver 6 herzustellen H und automatisch die Information ID-1 des Identifikationsmoduls 11 an den Transaktionsserver 6 mittels der Transaktions-Applikation 4 als Reaktion auf die mittels des mobilen Termials 9 erfassten Information ID-1 des Identifikationsmoduls 11 zu übermitteln U3. Der Transanktionsserver 6 ist dazu ausgestaltet, daraufhin Daten 70 zur Personenidentifikation der ersten Person 1 an das mobile Terminal 9 der zweiten Person 2 nach erfolgter Verifikation V der ersten Person 1 durch den Transaktionsserver 6 basierend auf den erfassten und an den Transaktionsserver 6 übermittelten Informationen ID-1 zu übermitteln U4. Die Verifikation wird über einen Vergleich der Nutzerdaten N1 der ersten Person 1 und den erfassten Informationen ID-1 durchgeführt. Die Informationen ID-1 des Identifikationsmoduls sind dazu in den Nutzerdaten N1 der ersten Person 1 hinterlegt bzw. sind Teil der Nutzerdaten N1. Das mobile Terminal 9 und die Transaktions-Applikation 4 sind dazu ausgestaltet, nach dem Empfang der Daten 70 zur Personenidentifikation der ersten Person 1 eine Eingabe transaktionsrelevanter Daten TR in das mobile Terminal 9 und eine Übermittlung U5 zumindest dieser transaktionsrelevanter Daten TR vom mobilen Terminal 9 an den Transaktionsserver 6 zu ermöglichen. In einer Ausführungsform können weitere transaktionsrelevante Daten wie beispielsweise die Uhrzeit übermittelt werden. Der Transaktionsserver 6 ist dazu ausgestaltet, daraufhin eine gültigen Transaktionscodierung 7-g aus der Mehrzahl der Transaktionscodierungen 7-1, 7-2, 7-3, ..., die im Transaktionssystem T den Nutzerdaten N1 der ersten Person 1 zugeordnet sind, an das mobile Terminal 9 als Reaktion auf die an den Transaktionsserver 6 übermittelten U5 transaktionsrelevanten Daten TR zu übermitteln U6 und die übermittelte gültige Transaktionscodierung 7-g in der Mehrzahl der gespeicherten Transaktionscodierungen 7-1, 7-2, 7-3, ... als eine ungültige Transaktionscodierung 7-u für nachfolgende Transaktionen zu markieren M. Des Weiteren sind die Transaktions-Applikation 4 und das mobile Terminal 9 dazu ausgestaltet, zumindest Teile der übermittelten gültigen Transaktionscodierung 7-g zusammen mit den Daten 70 zur Personenidentifikation der ersten Person 1 auf dem Anzeigeelement 91 des mobilen Terminals 9 darzustellen D, um einen visuellen Vergleich VG der dargestellten Transaktionscodierung 7-g und der Daten 70 zur Personenidentifikation der ersten Person 1 mit den vom Transaktionsserver 6 an die erste Person 1 übermittelte Mehrzahl an Transaktionscodierungen 7 und damit einen Abschluss AB der Transaktion durch die erste Person 1 zu ermöglichen. Das Vergleichsmittel 10 wird im Stornierverfahren verwendet, um ein Verifizieren der Rücknahme VR der bestimmten Transaktion durch den Transaktionsserver 6 durchführen zu können. Hierbei werden die vom mobilen Terminal 9 übermittelten U9 ersten und zweiten Transaktionscodes 71, 72 mit der den Nutzerdaten N1 der ersten Person 1 und dem Stornierungsidentifikationscode SC zugeordneten gespeicherten Transaktionscodierung 7-s umfassend die dafür gespeicherten ersten und zweiten Transaktionscodes 71, 72 verglichen.

Die hier dargestellten Komponenten des Transaktionssystems T können dabei als separate Komponenten, die über Datenleitungen mit dem Transaktionsserver 6 verbunden sind, ausgestaltet sein oder als Subkomponenten im Transaktionsserver 6 intergriert sein. Die Komponenten können je nach Aufgabe vom Fachmann als Prozessoren, Datenspeicher oder anderen Arten von Bauteilen gewählt werden. Das Transaktionsystem T kann beispielsweise als Netzwerk mit einem oder mehreren Transaktionsservern 6 mit Internetverbindung oder zusätzlich ein oder mehrere Computer zur Bereitstellung der Webseite 12 (in einem Webportal) umfassen, die mit dem oder den Transaktionsserver(n) 6 und ggf. den weiteren Komponenten des Transaktionssystems T verbunden sind. In einem Client-Server-Netzwerk stellen die Transaktionsserver 6 die Server (Backend) dar, während die Computer, über die die ersten und/oder zweiten Personen 1, 2 die Webseite 12 des Tansaktionssystems T bedienen, die Clients (Frontend) bilden. Wenn im Rahmen dieser Erfindung der Begriff "Transaktionsserver" verwendet wird, schließt dies immer die Möglichkeit der Verwendung von mehreren Transaktionsservern mit ein.

Fig. 2 zeigt eine Ausführungsform der zu übermittelnden Transaktionscodierungen. Die Transaktionscodierung 7 umfasst dabei jeweils Daten 70 zur Personenidentifikation für die erste Person 1, einen ersten Transaktionscode 71 und einen zweiten Transaktionscode 72. Hierbei unterscheiden sich die im Erzeugungsmittel 5 erzeugten und mit dem Transaktionsserver 6 zur ersten Person 1 übermittelten U2 Transaktionscodierungen 7 eindeutig untereinander, beispielsweise zumindest durch unterschiedliche erste und/oder zweite Transaktionscodes 71, 72. Die Transaktionscodes und die Personenidentifikation können vom Fachmann geeignet gewählt werden, beispielsweise als alphanummerische Codes. Für eine bessere Erkennung der Transaktionscodierungen 7 werden vorzugsweise graphische Codes oder Symbole für die Personenidentifikation 70, den ersten Transaktionscode 71 und den zweiten Transaktionscode 72 verwendet. Die an die erste Person 1 zu übermittelnde U2 Mehrzahl an Transaktionscodierungen kann in unterschiedlichen Ausführungsformen unterschiedliche viele Transaktionscodierungen 7-1, 7-2, 7-3, ... umfassen. Die Anzahl der zu übermittelnden U2 Transaktionscodierungen 7 kann im Transaktionssystem T beispielsweise vorbestimmt oder durch die erste Person 1 über die Webseite 12 gewählt werden. Nachdem die Transaktionscodierung 7-1 als eine noch unverbrauchte und daher gültige Transaktionscodierung 7-g für eine Transaktion vewendet wurde (oder deren Verwendung zum Scheitern der Transaktion führte), kann diese Transaktionscodierung 7-g nicht erneut für andere Transaktionen verwendet werden. Die verwendeten Transaktionscodierungen werden daher als ungültige Transaktionscodierungen 7-u in dem Transaktionscodierungen 7 markiert und in der Nutzerdatenbank 32 gespeichert. Für die nächste Freigabe einer Transaktion wird eine der restlichen an die erste Person übermittelten Transaktionscodierungen 7-2, 7-3, ... verwendet. Diese nun zu verwendende Transaktionscodierung kann die numerisch folgende Transaktionscodierung 7-2 auf der Liste der übermittelten Transaktionscodierungen sein. In diesem Fall stellt nun die Transaktionscodierung 7-2 die erste Transaktionscodierung für die Ausführung des Verfahrens dar. In einer anderen Ausführungsform wird die zu verwendende Transaktionscodierung vom Transaktionsserver 6 ausgewählt, beispielsweise die Transaktionscodierung 7-3. In diesem Fall stellt nun die Transaktionscodierung 7-3 die erste Transaktionscodierung für die Ausführung des Verfahrens dar. Für die Verwendung der Transaktionscodierungen 7 im Stornierverfahren sind den Transaktionscodierungen 7 bestimmte Kennungen zugeordnet, die als Stornierungsidentifikationscode SC übermittelt werden. Diese Kennungen können dabei Teil der Transaktionscodierung 7 sein oder separat von den Transaktionscodierungen 7 in der Liste der übermittelten Transaktionscodierungen 7 diesen zugeordnet sein. Diese Zuordnung wird ebenfalls in den Nutzerdaten N1 gespeichert.

Figur 3 zeigt eine Ausführungsform der Erfassung der Informationen zur Identifikation der ersten Person anhand des Identifikationsmoduls. Dazu startet A die zweite Person die Transaktions-Applikation 4 auf dem mobilen Terminal 9 über entsprechende Eingaben in ein Eingabefenster 92 im Anzeigeelement 91. Die maschinenlesbare Information ID-1 kann im Falle eines zweidimensionalen Matrixcodes 11a durch eine Kamera 93 im mobilen Terminal 9 ausgelesen werden. Dieser Matrixcode 11 a ist hier als ein QR-Code dargestellt, der aus einer quadratischen Matrix aus schwarzen und weißen Punkten besteht und eine spezielle Markierung in drei der vier Ecken des quadratischen Codes enthält. Der QR-Code und entsprechende Decodiermodule sind bespielsweise über die Forma Denso Wave erhältlich. Außerdem umfasst das Identifikationsmodul in dieser Ausführungsform einen NFC-Chip 11 b, der mittels eines NFC-Lesemoduls 94 im mobilen Terminal 9 auslesbar ist. Zusätzlich ist in dieser Ausführungsform ein alphanummerischer Identifikationscode 11 c (als Beispiel "ABCD-12345") auf dem Identifikationsmodul 11 angeordnet, der mittels der Transaktions-Applikation 4 über ein entsprechend bereitgestelltes Eingabefenster 92 eingegeben wird. Das Identifikationsmodul 11 kann dabei als ein Aufkleber geeignet zur Aufbringung am Geschäftspunkt 1a der ersten Person 1 ausgeführt sein. Die Betätigung der Kamera 93 des mobilen Terminals 9 zur Erfassung des Matrixcodes 11 a wird automatisch von der vorher gestarteten Transaktions-Applikation 4 als Reaktion auf die Betätigung der Kamera 93 ausgewertet. Die zweite Person 2 scannt mit geöfneter Transaktions-Appikation 4 den abgebildeten QR-Code 11a. Die Transaktions-Applikation liest den QR-Code aus und interpretiert die Information ID-1 als eindeutige URL, zu der sie eine Verbindung aufbaut. Die URL führt auf den Transaktionsserver 6, der der Transaktions-Applikation die Daten zur Personenidentifikation gibt. Bei einem vorhandenen NFC-Chip führt die erfasste Information durch das NFC-Lesemodul 94 des mobilen Terminals 9 als Reaktion auf die durch den NFC-Chip 11 b bereitgestellte Information ID-1 automatisch zu einer Auswertung/Absendung der Information von der vorher gestarteten Transaktions-Applikation 4. Die Übertragung erfolgt entweder verbindungslos mit passiven HF-RFID-Tags nach ISO 14443 oder ISO 15693 oder verbindungsbehaftet zwischen gleichwertigen aktiven Transmitters. Zusätzlichen Sicherheitsfunktionen zur sicheren Übertragung der Information, beispielsweise verschlüsselter Information, können in der Hardware des mobilen Terminals 9 integriert sein. Falls der auf dem Identifikationsmodule 11 angeordnete alphanummerische Identifikationscode 11 c (QR-Kombination) in ein durch die Transaktions-Applikation 4 bereitgestelltes Eingabefenster 92 eingegeben wird, führt diese Eingabe zur automatischen Auswertung der Information ID-1. Die Auswertung betrifft eine Umwandlung der Information in ein für den Transaktionsserver zum Vergleich mit den Nutzerdaten geeignetes Format. Zusätzlich prüft die Auswertung anhand des Formats, ob es sich bei den empfangenen oder eingegebenen Daten überhaupt um solche Inforamtionen handlen kann. Anschließend wird die auf dem mobilen Terminal 9 durch die Transaktions-Applikation 4 ausgewertete oder eingegebene Information 11 a, 11 b, 11 c an den Transaktionsserver 6 übermittelt U3. Sind die Informationen in den Formen 11a, 11 b und 11 c vorhanden, kann eine Eingabe / Erfassung aller drei Datenformate eine erhöhte Sicherheit bei der Identifikation der ersten Person und ein korrigieren von Übertragungsfehlern bei einem der Datenformate ermöglichen.

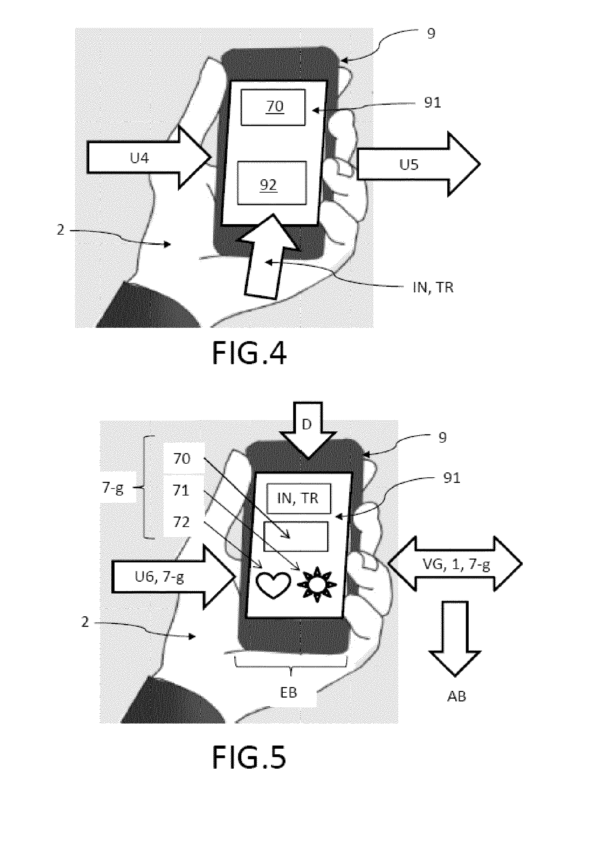

Fig.4 zeigt eine Ausführungsform des mobilen Terminals zur Eingabe der transaktionsrelevanten Daten. Vom Transaktionsserver 6 werden Daten 70 zur Personenidentifikation der ersten Person 1 zum mobilen Terminal 9 der zweiten Person 2 nach erfolgter Verifikation V der ersten Person 1 durch den Transaktionsserver 6 basierend auf den erfassten E und an den Transaktionsserver 6 übermittelten Informationen ID-1 übermittelt U4 und die transaktionsrelevanten Daten TR in das mobile Terminal 9 eingegeben IN und in Folge dessen nach einer Bestätigung der Eingabe vom mobilen Terminal 9 an den Transaktionsserver 6 übermittelt U5.

Fig.5 zeigt eine Ausführungsform des mobilen Terminals und der Darstellung der gültigen Transaktionscodierung zum Abschluss der Transaktion. Eine gültige Transaktionscodierung 7-g wird vom Transaktionsserver willkürlich (zufällig) aus der Mehrzahl der Transaktionscodierungen 7-1, 7-2, 7-3, ..., aus den Nutzerdaten N1 an das mobile Terminal 9 als Reaktion auf die an den Transaktionsserver 6 übermittelten transaktionsrelevanten Daten TR übermittelt U6 und zusammen mit den Daten 70 zur Personenidentifikation der ersten Person 1 auf dem Anzeigeelement 91 des mobilen Terminals 9 durch die Transaktions-Applikation 4 dargestellt D. In der Darstellung werden die ersten und zweiten Transaktionscodes 71, 72 der Transaktionscodierung 7-g als einfache graphische Symbole "Herz" und "Stern" dargestellt. Dies ermöglicht eine schnellen visuellen Vergleich VG der dargestellten Transaktionscodierung 7-g mit den vom Transaktionsserver 6 an die erste Person 1 übermittelten Transaktionscodierungen 7-1, 7-2, 7-3, ..., die gleichermaßen aufgebaut sind. Falls die gültige Transaktionscodierung 7-g in den an die erste Person übermittelten Transaktionscodierungen vorhanden ist, kann die erste Person einen Abschlusses AB der Transaktion durchführen, beispielsweise mit Übergabe der mit dieser Transaktion bezahlten Ware an die zweite Person.

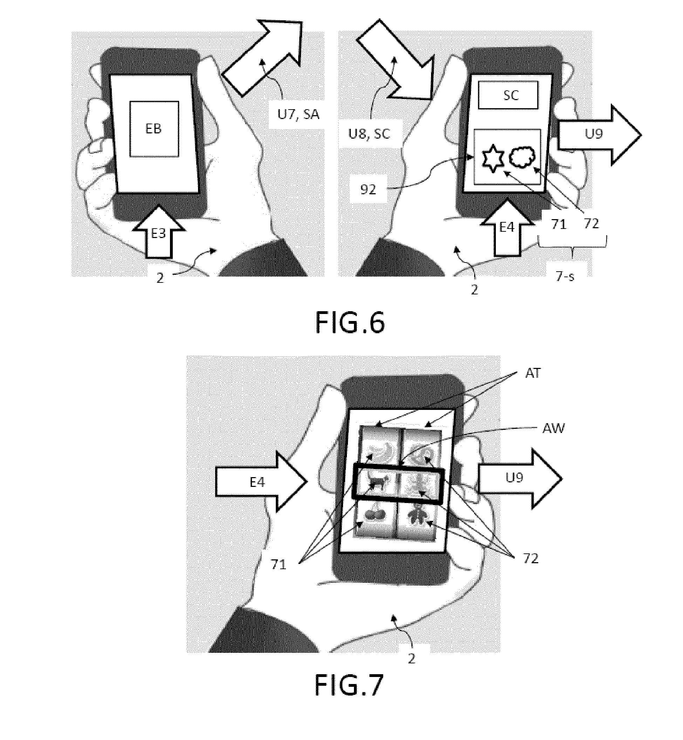

Fig.6 zeigt eine Ausführungsform des mobilen Terminals für das erfindungsmäße Stornierungsverfahren. Hier wird nach dem Start der Transaktions-Applikation 4 einer Stornierungsanfrage SA für eine bestimmte Transaktion in Form des entsprechenden elektronioschen Belegs EB durch die Transaktions-Applikation 4 nach entsprechender Eingabe E3 auf dem mobilen Terminal 4 an den Transaktionsserver 6 übermittelt U7, worauf der Transaktionsserver 6 einen Stornierungsidentifikationscode SC, beispielsweise eine Zahl oder ein Buchstabe, der eine bestimmte Transaktionscodierung innerhalb der an die erste Person 1 übermittelten Mehrzahl an Transaktionscodierungen 7 bezeichnet an das mobile Terminal 9 übermittelt U8. Daraufhin wird der ersten und zweiten Transaktionscode 71, 72, hier in Form von graphischen Transaktionscodes ("Stern" = 71, "Wolke" = 72), in das mobile Terminal 9 mit Hilfe der ersten Person 1 für die durch den Stornierungsidentifikationscode bezeichnete Transaktioncodierung 7-s eingegeben E4. Infolge der Bestätigung der Eingabe im mobilen Terminal wird der eingegebene erste und zweite Transaktionscode 71, 72 an der Transaktionsserver 6 übermittelt U9.

Fig.7 zeigt eine Ausführungsform der im Anzeigeelement 91 des mobilen Terminals 9 dargestellten Transaktionscodes 71, 72 und deren Auswahl AW im Anzeigelement 91. Die Eingabe E4 der ersten und zweiten Transaktionscodes 71, 72 erfolgt in dieser Ausführungsform mittels Auswahl AW aus einer im Anzeigelement 91 dargestellten Anzahl an möglichen ersten und zweiten Transaktionscodes 71, 72 die auf ersten und zweiten virtuellen, durch entsprechende Bedienung drehbaren Trommeln AT im Anzeigelement 92 angeordnet sind. Ein Auswahlfeld AW erleichtert die richtige Auswahl nach Bekanntgabe der richtigen Transaktionscodes 71, 72 durch die erste Person.

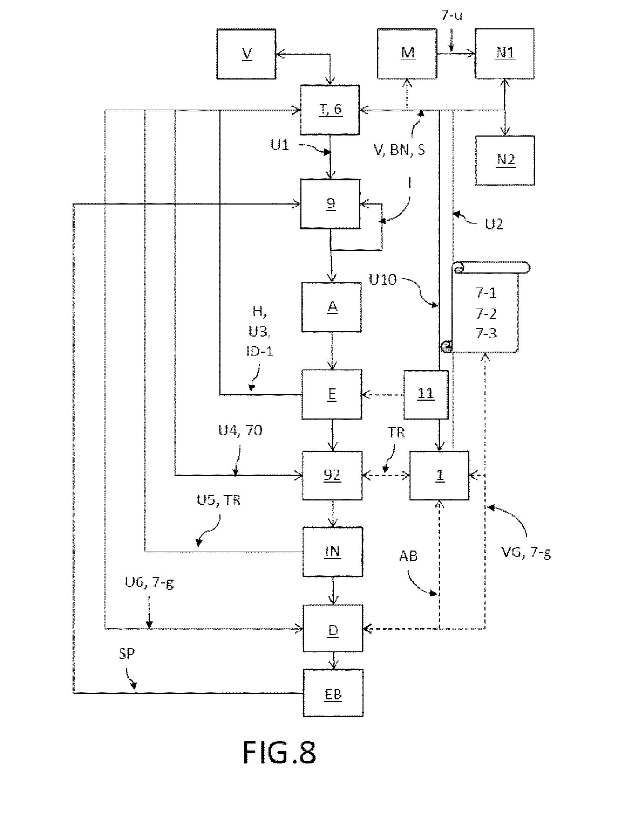

Fig.8 zeigt eine Ausführungsform des erfindungsgemäßen Verfahrens. Dabei werden zumindest erste Nutzerdaten N1 der ersten Person 1 und zweite Nutzerdaten N2 der zweiten Person 2 im Transaktionssystem T zum Zugriff durch den Transaktionsserver 6 bereitgestellt BN. Weiter wird ein Identifikationsmodul 11 durch die erste Person 1 an dem Geschäftspunkt 1a der ersten Person 1 umfassend Informationen ID-1 zur Identifikation der ersten Person 1 bereitgestellt. Der ersten Person wird eine Mehrzahl an Transaktionscodierungen 7-1, 7-2, 7-3, ..., durch das Transaktionssystem T übermittelt U2. Bevorzugt umfasst hier jede Transaktionscodierung 7 zumindest einen ersten Transaktionscode 71 und einen zweiten Transaktionscode 72, die als graphische Codes ausgestaltet sein können. Jjede der übermittelten Transaktionscodierungen 7 unterscheidet sich eindeutig von den anderen übermittelten Transaktionscodierungen 7. Die übermittelte Mehrzahl der Transaktionscodierungen 7 wird im Transaktionssystem T gespeichert S und zu den ersten Nutzerdaten N1 der ersten Person 1 zugeordnet. Nun ist das Transaktionssystem T für die Ausführung einer Transaktion mit der Transaktions-Applikation 4 vorbereitet, die nun auf dem mobilen Terminal 9 der zweiten Person 2 nach vorheriger Installiertion I gestartet A wird. Vorzugsweise wird dabei die Transaktions-Applikation 4 durch den Transaktionsserver 6 an das mobile Terminal 9 übermittelt U1. Anschließend wird die Information ID-1 des Identifikationsmoduls 11 mittels des mobilen Terminals 9 der zweiten Person 2 erfasst E und automatisch eine Verbindung des mobilen Terminals 9 mit dem Transaktionsserver 6 hergestellt und automatisch die Information ID-1 des Identifikationsmoduls 11 an den Transaktionsserver 6 durch die Transaktions-Applikation 4 als Reaktion auf die erfasste Information ID-1 des Identifikationsmoduls 11 übermittelt U3. Daraufhin werden Daten 70 zur Personenidentifikation der ersten Person 1 durch den Transaktionsserver 6 zum mobilen Terminal 9 der zweiten Person 2 übermittelt U4. Diese Übermittlung U4 erfolgt nach einer Verifikation V der ersten Person 1 durch den Transaktionsserver 6, die auf einem Vergleich der Nutzerdaten der ersten Personen 1 mit den erfassten E Informationen ID-1 basiert. Nachfolgend zu den erhaltenen Daten 70 der Personenidentifikation werden nun von der zweiten Person die transaktionsrelevante Daten TR in das mobile Terminal 9 eingegeben IN und nach einer Bestätigung der Eingabe automatisch von der Transaktions-Applikation 4 vom mobilen Terminal 9 an den Transaktionsserver 6 übermittelt U5. Im Gegenzug wird vom TRansaktionsserver eine gültige Transaktionscodierung 7-g aus der Mehrzahl der Transaktionscodierungen 7-1, 7-2, 7-3, ..., die im Transaktionssystem T den Nutzerdaten N1 der ersten Person 1 zugeordnet sind, ausgewählt und an das mobile Terminal 9 als Reaktion auf die an den Transaktionsserver 6 übermittelten transaktionsrelevanten Daten TR übermittelt U6. Parallel dazu wird die übermittelte gültige Transaktionscodierung 7-g durch den Transaktionsserver 6 in der Mehrzahl der den Nutzerdaten N1 zugeordneten gespeicherten Transaktionscodierungen 7-1, 7-2, 7-3, ... als eine ungültige Transaktionscodierung 7-u für nachfolgende Transaktionen markiert M. Die Markierung kann vom Fachmann geeignet ausgeführt werden, beispielsweise durch Setzen einer Häckchenbox oder Flagge für die ungültige Transaktionscodierung 7-u, was ein erneutes Übermitteln blockiert. Die übermittelte Transaktionscodierung 7-g inklusive der in ihr enthaltenen Transaktionscodes 71, 72 zusammen mit den Daten 70 zur Personenidentifikation der ersten Person 1 auf dem Anzeigeelement 91 des mobilen Terminals 9 durch die Transaktions-Applikation 4 dargestellt D. Damit wird ein visueller Vergleich VG der dargestellten Transaktionscodierung 7-g mit den vom Transaktionsserver 6 an die erste Person 1 übermittelten und noch gültigen Transaktionscodierungen 7-1, 7-2, 7-3, ..., ermöglicht. Ergibt der Vergleich VG, dass die dargestellte D Transaktionscodierung 7-g noch nicht verbraucht ist, schließt die erste Person 1 die Transaktion mit der zweiten Person 2 ab AB. Die Darstellung D wird als elektronischer Beleg EB auf dem mobilen Terminal 9 gespeichert. Vorzugsweise bestätigt die zweite Person die Speicherung SP durch Betätigen einer entsprechenden Schaltfläche, die von der Transaktions-Applikation dafür bereitgestellt wird.

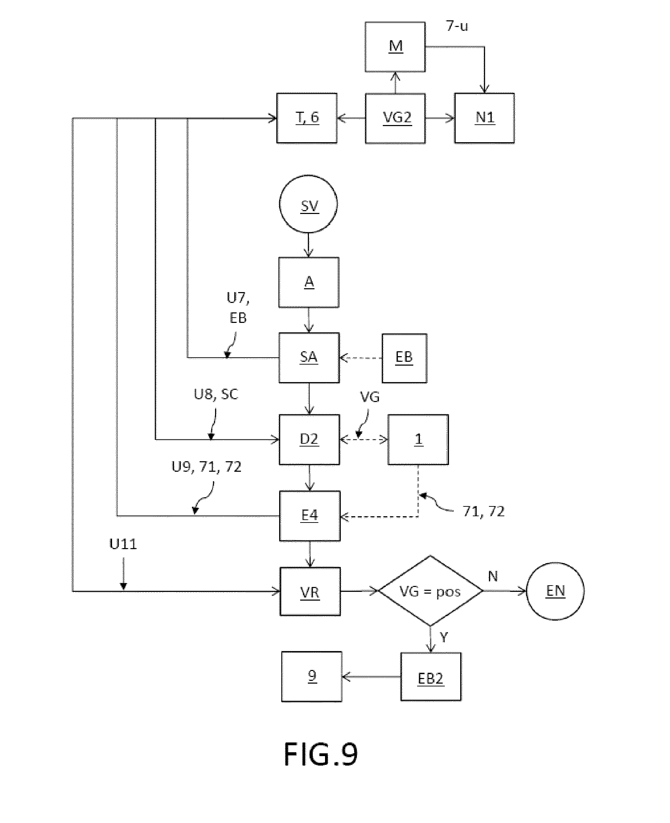

Fig.9 zeigt eine Ausführungsform des Stornierungsverfahrens SV, dessen Start durch die kreisrunde Fläche "SV" dargestellt ist. Mit dem Stornierungsverfahren SV unterstützt die Transaktions-Applikation 4 die verifizierte Rücknahme VR der Transaktion unter Verwendung einer der noch gültigen Transaktionscodierung 7-g aus der an die erste Person 1 übermittelten U2 Mehrzahl an Transaktionscodierungen 7-1, 7-2, 7-3, .....Das Stornierungsverfahren umfasst dabei das Übermitteln U7 einer Stornierungsanfrage SA für eine bestimmte Transaktion durch die Transaktions-Applikation 4 nach entsprechender Eingabe E3 auf dem mobilen Terminal 4 an den Transaktionsserver 6. Stornierungsanfragen können durch den Fachmann unterschiedlich ausgestaltet werden. In einer bevorzugten Ausführungsform wird der elektronische Beleg EB für die bestimmte Transaktion als Stornierungsanfrage SA an den Transaktionsserver 6 übermittelt, da der elektronische Beleg die betreffende Transaktion eindeutig über den verwendeten und abgespeicherten Transaktionscode identifiziert. Nachdem der Transaktionsserver die Stornierungsanfrage über die drahtlose Datenverbindung empfangen hat, übermittelt U8 der Transaktionsserver 6 einen Stornierungsidentifikationscode SC, der eine bestimmte Transaktionscodierung 7 innerhalb der an die erste Person 1 übermittelten Mehrzahl an Transaktionscodierungen 7 bezeichnet, wobei jede der Transaktionscodierung 7 erste und zweite Transaktionscodes 71, 72 umfasst, die sich eindeutig von den ersten und/oder zweiten Transaktionscodes 71, 72 anderer Transaktionscodierungen 7 unterscheidet. Der übermittelte Stornierungsidentifikationscode SC wird durch die Transaktions-Applikation nach dem Empfang dargestellt D2 und entsprechende erste und zweite Transaktionscodes 71, 72, vorzugsweise graphische Transaktionscodes, von der durch den übermittelten Stornierungsidentifikationscode SC bezeichneten Transaktionscodierung 7-s in das mobile Terminal 9 mit Hilfe der ersten Person 1 anhand der an die erste Person 1 übermittelten Mehrzahl an Transaktionscodierungen 7-1, 7-2, 7-3, ..., die die durch den Stornierungsidentifikationscode SC bezeichnete Transaktionscodierung 7-s umfasst, eingegeben E4 und anschließend an der Transaktionsserver 6 übermittelt U9. Der Transaktionsserver vergleicht VG2 die vom mobilen Terminal 9 übermittelten U9 ersten und zweiten Transaktionscodes 71, 72 für die Transaktionscodierung 7-s zum Stornierungsidentifikationscode SC mit der den Nutzerdaten N1 der ersten Person 1 und dem Stornierungsidentifikationscode SC zugeordneten gespeicherten Transaktionscodierung 7-s. Die verifizierte Rücknahme VR der Transaktion erfolgt im Falle eines positiven Vergleichs VG2. Die eingegebenen E4 Transaktionscodes und die Daten 70 zur Personenidentifikation werden als elektronischer Beleg EB2 für die Stornierung von der Transaktions-Applikation 4 im mobilen Terminal 9 abgespeichert. Bei einem negativen Vergleich VG2 wird das Stornierungsverfahren abgebrochen, siehe die kreisrunde Endfläche "EN" in Fig.9.

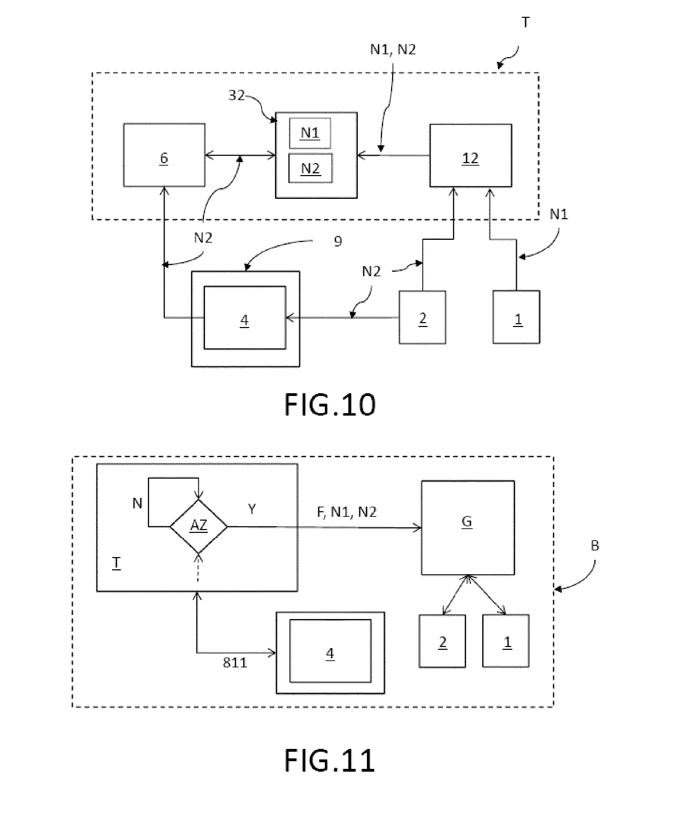

Fig.10 zeigt eine Ausführungsform des Schritts der Registrierung R der ersten und zweiten Person 1, 2 beim erfindungsgemäßen Transaktionssystem T zur Erstellung von ersten und zweiten Nutzerdaten N1, N2, wobei die Registrierung R der ersten und zweiten Person 1, 2 über eine Webseite 12 des Transaktionssystems T unter Angabe von Daten durchgeführt werden kann. Diese Nutzerdaten N1, N2 werden in einer Nutzerdatenbank 32 gespeichert, auf die der Transaktionsserver 6 über eine Datenverbindung zugreifen kann. Die zweite Person kann sich alternativ über die Ausführung der Transaktions-Applikation 4 registrieren. Hier startet ein Erststart der vorher auf dem mobilen Terminal 9 installierten Transaktions-Applikation 4 nach Aufbau einer drahtlosen Datenverbindung 811 zum Transaktionsserver 6 den Schritt des Registrierens für die zweite Person 2 automatisch, vorzugsweise werden die Kontaktdaten zum Aufbau der drahtlosen Datenverbindung 811 dabei durch die Transaktions-Applikation 4 automatisch zum Transaktionsserver 6 übermittelt. Die Transaktions-Applikation wurde vorher beispielsweise von einem Appstore auf das mobile Terminal 9 heruntergeladen und installiert. Die zweiten Nutzerdaten werden vom Transaktionsserver 6 empfangen und zur Speicherung S zur Nutzerdatenbank 32 weitergeleitet.

Fig.11 zeigt eine Ausführungsform eines Bezahlsystems B mit erfindungsgemäßen Transaktionssystem T und Geldverwaltungssystem G zur Ausführung der Transaktion nach erfindungsgemäßer Freigabe F. Im Bezahlsystem B ist das Transaktionssystem T zumindest mit einem mobilen Terminal 9 und mit mindestens einem Geldverwaltungssystem G über Datenverbindungen verbunden. Die Datenverbindung zu den Geldverwaltungssystemen G kann geeignet ausgestaltet sein. Zur Ausführung der Transaktion, die durch den Transaktionsserver 6 freigegeben wurde, werden erste und zweite Nutzerdaten N1, N2 sowie eine entsprechende Freigabe F vom Transaktionssystem T an das Geldverwaltungssystem G übermittelt, worauf als Reaktion auf diese Übermittlung das Geldverwaltungssystem G die Transaktion gemäß der ersten und zweiten Nutzerdaten N1, N2 durchführt. Hierbei umfasst die Freigabe auch die transaktionsrelevanten Daten TR, die beispielsweise den zu zahlenden Betrag umfassen. In der hier gezeigten Ausführungsform übermittelt das Transaktionssystem T die Freigabe F erst nach Ablauf AZ eines im Transaktionssystem T festgelegten Zeitintervalls an das Geldverwaltungssystem G, sofern dem Transaktionsserver T innerhalb des Zeitintervalls keine Rücknahme VR der Transaktion gemäß des erfindungsgemäßen Stornierungsverfahrens SV übermittelt wurde. Das Geldverwaltungssystem übermittelt den ersten und zweiten Personen Benachrichtigungen über die ausgeführten Transaktionen, die durch das Transaktionssystem freigegeben wurden. In einer Ausführungsform sind die Informationen, die an die erste Person 1 übermittelt werden, so ausgestaltet, dass die erste Person 1 ein elektronisches Kassenbuch umfassend die Beträge der freigegebenen Transaktionen und deren Buchung im Geldverwaltungssystem G führen kann. Dazu benötigt die erste Person 1 wie für die Registrierung beim Transaktionssystem T einen Internetzugang mit entsprechender Hardware. Vorzugsweise wird das elektronische Kassenbuch über die Webseite 12 des Transaktionssystems T für die erste Person 1 bereitgestellt.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: erste Person
- 1a: Geschäftspunkt der ersten Person
- 11: Identifikationsmodul
- 11a: Matrixcode
- 11b: NFC-Chip
- 11c: alphanummerischer Identifikationscode
- 2: zweite Person
- 31: Applikationsspeicher
- 32: Nutzerdatenbank
- 4: Transaktions-Applikation
- 5: Erzeugungsmittel für die Transaktionscodierungen
- 51: Erzeugungsmodul für das Identifikationsmodul
- 6: Transaktionsserver
- 7: Transaktionscodierungen
- 7-g: gültige Transaktionscodierung
- 7-u: ungültige Transaktionscodierung
- 7-s: durch den Stornierungsidentifikationscode bezeichnete Transaktionscodierung
- 7-1: erste Transaktionscodierung
- 7-2: zweite Transaktionscodierung
- 7-3: dritte Transaktionscodierung
- 70: Daten zur Personenidentifikation
- 71: erster Transaktionscode
- 72: zweiter Transaktionscode
- 7A: auf dem mobilen Terminal auswählbare Transaktionscodes
- 81: Datenübertragungsmittel (mobiles Terminal - Transaktionsserver)
- 811: Drahtlose Datenverbindung zwischen mobilem Terminal und Transaktionsserver
- 82: Datenübertragungsmittel (Transaktionssystem - erste Person)
- 821: Datenverbindung zwischen Transaktionsserver und Drucker der ersten Person
- 9: mobiles Terminal
- 91: Anzeigeelement des mobilen Terminals
- 92: Eingabefenster im Anzeigeelement
- 93: Kamera des mobilen Terminals
- 94: NFC-Lesemodul des mobilen Terminals
- 10: Vergleichsmittel (zum Vergleich von 7-s mit 7-1, 7-2, 7-3, ...)
- 12: Webseite des Transaktionssystems
- 13: Drucker der ersten Person

- A: Starten der Transaktions-Applikation
- AB: Abschluss der Transaktion durch die erste Person
- AD: Ausdrucken der Mehrzahl an Transaktionscodierungen durch die erste Person
- AT: drehbare virtuelle Trommel zur Auswahl der Transaktionscodes
- AW: Auswählen der ersten und zweiten Transaktionscodes
- AZ: Ablauf Zeitintervall
- B: Bezahlsystem
- BN: Bereitstellen von Nutzerdaten
- BI: Bereitstellen des Identifikationsmoduls
- D: Darstellen des übermittelten Teils der ersten Transaktionscodierung auf dem Anzeigeelement des mobilen Terminals
- D2: Darstellen des Stornierungsidentifikationscodes im Anzeigeelement
- E: Erfassen der Information des Identifikationsmoduls
- E2: Eingabe des alphanummerischen Identifikatonscodes in das mobile Terminal
- E3: Eingabe der Stornierungsanfrage in das mobile Terminal
- E4: Eingabe der mit dem Stornierungsidentifikationscode bezeichneten Transaktionscodierung
- EB: elektronischer Beleg für die Transaktion
- EB2: elektronischer Beleg für eine erfolgreiche Rücknahme der Transaktion (Stornierung)
- F: Freigabe der Transaktion
- G: Geldverwaltungssystem
- H: Herstellen einer Verbindung mobiles Terminal - Transaktionsserver
- I: Installieren der Transaktions-Applikation auf dem mobilen Terminal
- ID-1: Informationen zur Identifikation der ersten Person
- IN: Eingabe transaktionsrelevanter Daten
- M: Markieren einer übermittelten gültigen Transaktionscodierung im Transaktionssysytem als ungültig
- N1: erste Nutzerdaten
- N2: zweite Nutzerdaten
- R: Registrieren der ersten und zweiten Personen beim Transaktionssystem
- S: Speichern und Zuordnen der übermittelten Transaktionscodierungen zu den ersten Nutzerdaten
- SA: Stornieranfrage
- SC: Stornierungsidentifikationscode
- SP: Speichern des elektronischen Belegs auf dem mobilen Terminal
- SV: Stornierverfahren
- T: Transaktionssystem
- TR: transaktionsrelevante Daten
- U1: Übermitteln der Transaktions-Applikation an das mobile Terminal
- U2: Übermitteln einer Mehrzahl an Transaktionscodierungen an die erste Person
- U3: Übermitteln der Information ID-1 vom mobilen Terminal an den Transaktionsserver
- U4: Übermitteln von Daten zur Personenidentifikation der ersten Person zum mobilen Terminal
- U5: Übermitteln transaktionsrelevanter Daten an den Transaktionsserver
- U6: Übermitteln einer gültigen Transaktionscodierung von Transaktionsserver an das mobile Terminal
- U7: Übermitteln der Stornierungsanfrage an der Transaktionsserver
- U8: Übermitteln des Stornierungsidentifikationscodes vom Transaktionsserver an das mobile Terminal
- U9: Übermitteln der im Stornierverfahren eingegebenen ersten und zweiten Transaktionscodes vom mobilen Terimnal an den Transaktionsserver
- U10: Übermitteln des Identifikationsmoduls an die erste Person
- U11: Übermitteln der Verifikation der Rücknahme (Ergebnis Vergleich VG2) an das mobile Terminal der zweiten Person
- V: Verifikation der ersten Person anhand der erfassten Information ID-1
- VG: Vergleichen der dargestellten mit den bei der ersten Person vorhandenen Transaktionscodierungen
- VG2: Vergleich der eingegebenen und der im Transaktionsserver gespeicherten ersten und zweiten Transaktionscodes für die in Stornierverfahren bezeichnete Transaktionscodierung
- VR: verifizierte Rücknahme der Transaktion / Verifizieren der Rücknahme

## Patentansprüche

1. Ein elektronisches Verfahren zur sicheren Freigabe einer Transaktion im Rahmen eines Geschäfts zumindest zwischen einer ersten und einer zweiten Person (1, 2) über ein mobiles Terminal (9) der zweiten Person (2) mit einem Anzeigeelement (91), das mit einem Transaktionsserver (6) eines Transaktionsystems (T) über eine drahtlose Datenverbindung (811) zu einem Datenaustausch zur Freigabe der Transaktion verbunden ist, umfassend die Schritte
- Bereitstellen (BN) zumindest erster Nutzerdaten (N1) der ersten Person (1) und zweiter Nutzerdaten (N2) der zweiten Person (2) im Transaktionssystem (T) zum Zugriff durch den Transaktionsserver (6),
- Bereitstellen (B1) eines Identifikationsmoduls (11) durch die erste Person (1) an einem Geschäftspunkt (1a) der ersten Person (1) umfassend Informationen (ID-1) zur Identifikation der ersten Person (1),
- Übermitteln (U2) einer Mehrzahl an Transaktionscodierungen (7-1, 7-2, 7-3, ...) durch das Transaktionssystem (T) an die erste Person (1), wobei sich jede der übermittelten Transaktionscodierungen (7) eindeutig von den anderen übermittelten Transaktionscodierungen (7) unterscheidet,
- Speichern (S) und Zuordnen der übermittelten Mehrzahl der Transaktionscodierungen (7) im Transaktionssystem (T) zu den ersten Nutzerdaten (N1) der ersten Person (1),
- Starten (A) einer auf dem mobilen Terminal (9) der zweiten Person (2) installierten Transaktions-Applikation (4),
- Erfassen (E) der Information (ID-1) des Identifikationsmoduls (11) mittels des mobilen Terminals (9) und automatisches Herstellen (H) einer Verbindung des mobilen Terminals (9) mit dem Transaktionsserver (6) und automatisches Übermitteln (U3) der Information (ID-1) des Identifikationsmoduls (11) an den Transaktionsserver (6) durch die Transaktions-Applikation (4) als Reaktion auf die erfasste Information (ID-1) des Identifikationsmoduls (11),
- Übermitteln (U4) von Daten (70) zur Personenidentifikation der ersten Person (1) durch den Transaktionsserver (6) zum mobilen Terminal (9) der zweiten Person (2) nach erfolgter Verifikation (V) der ersten Person (1) durch den Transaktionsserver (6) basierend auf den an den Transaktionsserver (6) übermittelten (U3) Informationen (ID-1),
- Eingabe (IN) transaktionsrelevanter Daten (TR) in das mobile Terminal (9) und Übermittlung (U5) zumindest dieser transaktionsrelevanter Daten (TR) vom mobilen Terminal (9) an den Transaktionsserver (6),
- Übermitteln (U6) einer gültigen Transaktionscodierung (7-g) aus der Mehrzahl der Transaktionscodierungen (7-1, 7-2, 7-3, ...), die im Transaktionssystem (T) den Nutzerdaten (N1) der ersten Person (1) zugeordnet sind durch den Transaktionsserver (6) an das mobile Terminal (9) als Reaktion auf die an den Transaktionsserver (6) übermittelten transaktionsrelevanten Daten (TR),
- Markieren (M) der übermittelten gültigen Transaktionscodierung (7-g) durch den Transaktionsserver (6) in der Mehrzahl der den Nutzerdaten (N1) zugeordneten gespeicherten Transaktionscodierungen (7-1, 7-2, 7-3, ...) als eine ungültige Transaktionscodierung (7-u) für nachfolgende Transaktionen,
- Darstellen (D) zumindest von Teilen der übermittelten gültigen Transaktionscodierung (7-g) zusammen mit den Daten (70) zur Personenidentifikation der ersten Person (1) auf dem Anzeigeelement (91) des mobilen Terminals (9) durch die Transaktions-Applikation (4) zur Ermöglichung eines visuellen Vergleich (VG) der dargestellten Transaktionscodierung (7-g) und der Daten (70) zur Personenidentifikation der ersten Person (1) mit den vom Transaktionsserver (6) an die erste Person (1) übermittelten Transaktionscodierungen (7-1, 7-2, 7-3, ...).

2. Das Verfahren nach Anspruch 1,
**dadurch gekennzeichnet,**
**dass** die Information (ID-1) zur Identifikation der ersten Person (1), die durch das Identifikationsmodul (11) bereitgestellt wird, maschinenlesbare Information umfasst.

3. Das Verfahren nach Anspruch 2,
**dadurch gekennzeichnet,**
**dass** die maschinenlesbare Information (ID-1) ein zweidimensionaler Matrixcode (11a) ist auslesbar durch eine Kamera (93) im mobilen Terminal (9) und/oder ein NFC-Chip (11 b) auslesbar durch ein NFC-Lesemodul (94) im mobilen Terminal (9).

4. Das Verfahren nach Anspruch 3,
**dadurch gekennzeichnet,**
**dass** das Identifikationsmodul (11) ein Aufkleber geeignet zur Aufbringung am Geschäftspunkt (1a) der ersten Person (1) ist, vorzugsweise umfassend den Matrixcode (11a) an der Oberfläche des Aufklebers (11) und/oder ein NFC-Chip (11b) im oder am Aufkleber (11) und/oder einen alphanummerischen Identifikationscode (11 c) zur Eingabe (E2) im mobilen Terminal (9).

5. Das Verfahren nach Anspruch 4,
**dadurch gekennzeichnet,**
**dass** die Information (ID-1) des Identifikationsmoduls (11) entweder
- als zweidimensionaler Matrixcode (11a) mittels Betätigung der Kamera (93) des mobilen Terminal (9) aufgenommen und der aufgenommene Matrixcode (11a) automatisch von der vorher gestarteten Transaktions-Applikation (4) als Reaktion auf die Betätigung der Kamera (93) ausgewertet wird, oder
- mittels des NFC-Lesemoduls (94) des mobilen Terminals (9) vom NFC-Chip (11 b) ausgelesen und automatisch als Reaktion auf die durch den NFC-Chip (11 b) bereitgestellte Information (ID-1) von der vorher gestarteten Transaktions-Applikation (4) ausgewertet wird, oder
- in der auf dem Identifikationsmodule (11) angeordnete alphanummerische Identifikationscode (11 c) in ein durch die Transaktions-Applikation (4) bereitgestelltes Eingabefenster (92) eingegeben wird, und
- die auf dem mobilen Terminal (9) durch die Transaktions-Applikation (4) ausgewertete oder eingegebene Information (11a, 11 b, 11c) an den Transaktionsserver (6) übermittelt wird.

6. Das Verfahren nach einem der voranstehenden Ansprüche,
**dadurch gekennzeichnet**
**dass** die Darstellung (D) zumindest Teile der Transaktionscodierung (7-1), vorzugsweise der ersten und zweiten Transaktionscode (71, 72) der Transaktionscodierung (7-1), zusammen mit den Daten (70) zur Personenidentifikation der ersten Person (1) auf dem Anzeigeelement (91) des mobilen Terminals (9) als elektronischer Beleg (EB) für die Transaktion zumindest durch die Transaktions-Applikation (4) auf dem mobilen Terminal (9) der zweiten Person (2) gespeichert (SP) wird

7. Das Verfahren nach Anspruch 6,
**dadurch gekennzeichnet**
**dass** die Transaktions-Applikation (4) die verifizierte Rücknahme (VR) der Transaktion über Bereitstellung eines Stornierungsverfahrens (SV) unter Verwendung einer der noch gültigen Transaktionscodierungen (7-1, 7-2, 7-3, ...) aus der an die erste Person (1) übermittelten (U2) Mehrzahl an Transaktionscodierungen (7-1, 7-2, 7-3, ...) ermöglicht.

8. Das Verfahren nach Anspruch 7,
**dadurch gekennzeichnet,**
**dass** das Stornierungsverfahren (SV) die folgenden Schritte umfasst:
- Übermitteln (U7) einer Stornierungsanfrage (SA) für eine bestimmte Transaktion durch die Transaktions-Applikation (4) nach entsprechender Eingabe (E3) auf dem mobilen Terminal (4) an den Transaktionsserver (6),
- Übermitteln (U8) eines Stornierungsidentifikationscodes (SC), der eine bestimmte Transaktionscodierung innerhalb der an die erste Person übermittelten Mehrzahl an Transaktionscodierungen (7) bezeichnet, wobei jede der Transaktionscodierung (7) erste und zweite Transaktionscodes (71, 72) umfasst, die sich eindeutig von den ersten und/oder zweiten Transaktionscodes (71, 72) anderer Transaktionscodierungen (7) unterscheiden, und Darstellen (D2) dieses Stornierungsidentifikationscodes (SC) im Anzeigeelement (91),
- Eingabe (E4) der ersten und zweiten Transaktionscodes (71, 72), vorzugsweise graphische Transaktionscodes, von der durch den übermittelten Stornierungsidentifikationscode (SC) bezeichneten Transaktionscodierung (7-s) in das mobile Terminal (9) mit Hilfe der ersten Person (1) anhand der an die erste Person (1) übermittelten Mehrzahl an Transaktionscodierungen (7-1, 7-2, 7-3, ...), die die durch den Stornierungsidentifikationscode (SC) bezeichnete Transaktionscodierung (7-s) umfasst,
- Übermitteln (U9) der eingegebenen ersten und zweiten Transaktionscodes (71, 72) an den Transaktionsserver (6),
- Verifizieren der Rücknahme (VR) der bestimmten Transaktion durch den Transaktionsserver (6) über einen Vergleich (VG2) der vom mobilen Terminal (9) übermittelten (U9) ersten und zweiten Transaktionscodes (71, 72) mit der den Nutzerdaten (N1) der ersten Person (1) und dem Stornierungsidentifikationscode (SC) zugeordneten gespeicherten Transaktionscodierung (7-s) umfassend die dafür gespeicherten ersten und zweiten Transaktionscodes (71, 72), und
- Rücknahme (VR) der Transaktion im Falle eines positiven Vergleichs (VG2) durch Erzeugen einer Storno-Gutschrift.

9. Das Verfahren nach Anspruch 8,
**dadurch gekennzeichnet,**
**dass** der elektronische Beleg (EB) für die bestimmte Transaktion als Stornierungsanfrage (SA) an den Transaktionsserver (6) übermittelt wird

10. Das Verfahren nach Anspruch 8 oder 9,
**dadurch gekennzeichnet,**
**dass** die Eingabe (E4) der ersten und zweiten Transaktionscodes (71, 72) mittels Auswahl (AW) aus einer im Anzeigelement (91) dargestellten Anzahl an möglichen ersten und zweiten Transaktionscodes (71, 72) erfolgt, vorzugsweise sind die ersten und zweiten Transaktionscodierungen (71, 72) jeweils auf ersten und zweiten virtuellen, durch entsprechende Bedienung drehbaren Trommeln (AT) im Anzeigelement (92) angeordnet.

11. Das Verfahren nach einem der voranstehenden Ansprüche, umfassend den weiteren Schritt eines Registrierens (R) zumindest der ersten Person und zweiten Person (1, 2) beim Transaktionssystem (T) zur Erstellung von ersten und zweiten Nutzerdaten (N1, N2), vorzugsweise wird die Registrierung (R) zumindest der ersten Person (1) über eine Webseite (12) des Transaktionssystems (T) unter Angabe von Daten durch zumindest die erste Person (1) durchgeführt.

12. Das Verfahren nach Anspruch 11,
**dadurch gekennzeichnet,**
**dass** ein Erststart der installierten Transaktions-Applikation (4) auf dem mobilen Terminal (9) nach Aufbau einer drahtlose Datenverbindung (811) zum Transaktionsserver (6) den Schritt des Registrierens (R) für die zweite Person (2) automatisch startet, vorzugsweise werden Kontaktdaten zum Aufbau der drahtlosen Datenverbindung (811) durch die Transaktions-Applikation (4) automatisch zum Transaktionsserver (6) übermittelt.

13. Das Verfahren nach Anspruch 11 oder 12,
**dadurch gekennzeichnet,**
**dass** das Transaktionssystem (T) automatisch die Mehrzahl der Transaktionscodierungen (7-1, 7-2, 7-3, ...) für die registrierte erste Person (1) zur Übermittlung (U2) an die erste Person (1) erzeugt, vorzugsweise erfolgt die Übermittlung (U2) der Mehrzahl der Transaktionscodierungen (7-1, 7-2, 7-3, ...) durch das Transaktionssystem (T) an die erste Person (1) mittels Ausdrucken (AD) der Transaktionscodierungen (7) auf einem Drucker (13) der ersten Person (1).

14. Transaktions-Applikation (4) gespeichert auf einem Speichermedium, die geeignet ist, das Verfahren nach Anspruch 1 in Verbindung mit einem Transaktionssystem (T) nach Anspruch 17 auszuführen.

15. Mobiles Terminal (9) mit einem Anzeigeelement (91), das mit einem Transaktionsserver (6) eines Transaktionssystems (T) nach Anspruch 17 über eine drahtlose Datenverbindung (811) zu einen Datenaustausch verbindbar ist und auf dem eine Transaktions-Applikation (4) nach Anspruch 12 zur Ausführung auf dem mobilen Terminal (9) installiert ist und auf dem mobilen Terminal (9) ausgeführt werden kann.

16. Mobiles Terminal (9) nach Anspruch 15,
**dadurch gekennzeichnet**
**dass** das mobile Terminal (9) eine Kamera (93) geeignet zur Aufnahme zweidimensionaler Matrixcodes (11a) und/oder ein NFC-Lesemodul (94) geeignet zum Auslesen eines NFC-Chips (11b) umfasst.

17. Transaktionssystem (T) zur Freigabe einer Transaktion im Rahmen eines Geschäfts zumindest zwischen einer ersten und einer zweiten Person (1, 2) umfassend einen Applikationsspeicher (31) zum Speichern einer Transaktions-Applikation (4) nach Anspruch 14, eine Nutzerdatenbank (32) zur Speicherung zumindest erster Nutzerdaten (N1) der ersten Person (1) und zweiter Nutzerdaten (N2) der zweiten Person (2), ein Erzeugungsmittel (5) zur Erzeugung von Transaktionscodierungen (7), mindestens ein Identifikationsmodul (11) zum Bereitstellen von Informationen (ID-1) zur Identifikation der ersten Person (1) an einem Geschäftspunkt (1a) der ersten Person (1), und einen zumindest mit dem Applikationsspeicher (31), der Nutzerdatenbank (32) und dem Erzeugungsmittel (5) über Datenleitungen verbundener und mit einem mobilen Terimnal (9) der zweiten Person verbindbarer Transaktionsserver (6), der dazu ausgestaltet ist
- zumindest die ersten und zweiten Nutzerdaten (N1, N2) bereitzustellen (BN),
- mit geeigneten Datenübertragungsmitteln (82) einer Mehrzahl an erzeugten Transaktionscodierungen (7-1, 7-2, 7-3,...) an die erste Person (1) zu übermitteln (U2), wobei sich jede der übermittelten (U2) Transaktionscodierungen (7) eindeutig von den anderen übermittelten Transaktionscodierungen (7) unterscheidet, und
- eine drahtlose Datenverbindung (811) mit einem mobilen Terminal (9) der zweiten Person (2) herzustellen,
- wobei das mobile Terminal (9) dazu ausgestaltet ist, nach dem Starten der auf dem mobilen Terminal (9) installierten Transaktions-Applikation (4) die Informationen (ID-1) des Identifikationsmoduls (11) zu erfassen (E) und automatisch eine Verbindung mit dem Transaktionsserver (6) herzustellen (H) und automatisch die Information (ID-1) des Identifikationsmoduls (11) an den Transaktionsserver (6) mittels der Transaktions-Applikation (4) als Reaktion auf die mittels des mobilen Termials (9) erfassten Information (ID-1) des Identifikationsmoduls (11) zu übermitteln (U3), woraufhin der Transaktionsserver (6) dazu ausgestaltet ist, Daten (70) zur Personenidentifikation der ersten Person (1) an das mobile Terminal (9) nach erfolgter Verifikation (V) der ersten Person (1) durch den Transaktionsserver (6) basierend auf den an den Transaktionsserver (6) übermittelten Informationen (ID-1) zu übermitteln (U4),
- das mobile Terminal (9) und die Transaktions-Applikation (4) dazu ausgestaltet sind, eine Eingabe (IN) transaktionsrelevanter Daten (TR) in das mobile Terminal (9) und eine Übermittlung (U5) zumindest dieser transaktionsrelevanter Daten (TR) vom mobilen Terminal (9) an den Transaktionsserver (6) zu ermöglichen ,
- der Transaktionsserver (6) dazu ausgestaltet ist, daraufhin eine gültigen Transaktionscodierung (7-g) aus der Mehrzahl der Transaktionscodierungen (7-1, 7-2, 7-3, ...), die im Transaktionssystem (T) den Nutzerdaten (N1) der ersten Person (1) zugeordnet sind an das mobile Terminal (9) als Reaktion auf die an den Transaktionsserver (6) übermittelten (U5) transaktionsrelevanten Daten (TR) zu übermitteln (U6) und die übermittelte gültige Transaktionscodierung (7-g) in der Mehrzahl der gespeicherten Transaktionscodierungen (7-1, 7-2, 7-3, ...) als eine ungültige Transaktionscodierung (7-u) für nachfolgende Transaktionen zu markieren (M), und
- die Transaktions-Applikation (4) und das mobile Terminal (9) dazu ausgestaltet sind, zumindest Teile der übermittelten gültigen Transaktionscodierung (7-g) zusammen mit den Daten (70) zur Personenidentifikation der ersten Person (1) auf dem Anzeigeelement (91) des mobilen Terminals (9) darzustellen (D), um einen visuellen Vergleich (VG) der dargestellten Transaktionscodierung (7-g) und der Daten (70) zur Personenidentifikation der ersten Person (1) mit den vom Transaktionsserver (6) an die erste Person (1) übermittelte Mehrzahl an Transaktionscodierungen (7) durch die erste Person (1) zu ermöglichen.

18. Transaktionssystem nach Anspruch 17,
**dadurch gekennzeichnet,**
**dass** der Transaktionsserver (6) dazu ausgestaltet ist, mit geeigneten Datenübertragungsmitteln (81) die Transaktions-Applikation (4) an ein mobiles Terminal (9) der zweiten Person (2) nach Anspruch 16 zu übermitteln (U1),

19. Transaktionssystem nach Anspruch 17 oder 18,
**dadurch gekennzeichnet,**
**dass** das Transaktionssystem (T) eine Webseite (12) zum Registrieren (R) zumindest der ersten Person (1) beim Transaktionssystem (T) und zur Eingabe von Daten durch zumindest die erste Person (1) zur Erstellung von ersten Nutzerdaten (N1) umfasst

20. Bezahlsystem (B) mit einem Transaktionssystem (T) nach Anspruch 17, mindestens einem mobilen Terminal (9) nach Anspruch 15, das mit dem Transaktionsystem (T) über eine drahtlose Datenverbindung (811) zur Ausführung eines Verfahrens nach Anspruch 1 verbunden ist, und mit mindestens einem Geldverwaltungssystem (G), das mit dem Transaktionssystem (T) verbunden ist, um die Transaktion zwischen erster und zweiter Person (1, 2) nach Freigabe (F) durch das Transaktionssystem (T) auszuführen, wobei die Freigabe (F) an das Geldverwaltungssystem (G) durch das Transaktionssystem (T) als Reaktion auf die an das mobile Terminal (9) übermittelte gültige Transaktionscodierung (7-g) erfolgt.
